(19) Europäisches Patentamt
European Patent Office
Office européen des brevets

(11) Numéro de publication : **0 294 302 B1**

(12) # FASCICULE DE BREVET EUROPEEN

(45) Date de publication du fascicule du brevet : **11.12.91 Bulletin 91/50**

(51) Int. Cl.[5] : **C08G 18/34,** C08G 69/42, C08G 73/10, C08G 77/42

(21) Numéro de dépôt : **88420177.3**

(22) Date de dépôt : **01.06.88**

(54) **Copolymères thermostables séquences de structure (bloc imide-amide)-(bloc urée-siloxane.**

(30) Priorité : **05.06.87 FR 8708105**

(43) Date de publication de la demande : **07.12.88 Bulletin 88/49**

(45) Mention de la délivrance du brevet : **11.12.91 Bulletin 91/50**

(84) Etats contractants désignés : **AT BE CH DE ES FR GB IT LI LU NL SE**

(56) Documents cités :
**EP-A- 0 196 939**
**DE-A- 3 432 509**
**US-A- 4 395 527**

(73) Titulaire : **RHONE-POULENC CHIMIE**
**25, quai Paul Doumer**
**F-92408 Courbevoie Cédex (FR)**

(72) Inventeur : **Barthelemy, Pascal**
**21, rue de la Part-Dieu**
**F-69003 Lyon (FR)**
Inventeur : **Camberlin, Yves**
**68 bis, Quai Clémenceau**
**F-69300 Caluire (FR)**
Inventeur : **Michaud, Philippe**
**19, rue du Tonkin**
**F-69100 Villeurbanne (FR)**

(74) Mandataire : **Trolliet, Maurice et al**
**RHONE-POULENC INTERSERVICES Service Brevets Chimie Centre de Recherches de Saint-Fons B.P. 62**
**F-69192 Saint-Fons Cédex (FR)**

**EP 0 294 302 B1**

Il est rappelé que : Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

Jouve, 18, rue Saint-Denis, 75001 PARIS

## Description

La présente invention a pour objet des copolymères thermostables séquencés comprenant des blocs (imide-amide) et (urée-siloxane).

L'association d'unités récurrentes imides et/ou amides et siloxanes a été avantageusement employée dans la préparation de polymères utilisables dans les applications de revêtement isolant pour lesquelles le revêtement doit posséder une excellente stabilité thermique. Un art antérieur représentatif qui décrit des polymères de cette nature consiste dans le brevet américain US-A-4.395.527. Plus précisément, ce document propose des poly(imide-amide) contenant des unités siloxanes qui sont le produit de réaction d'une diamine à groupement diorganopolysiloxane avec un monoanhydride d'acide tricarboxylique :

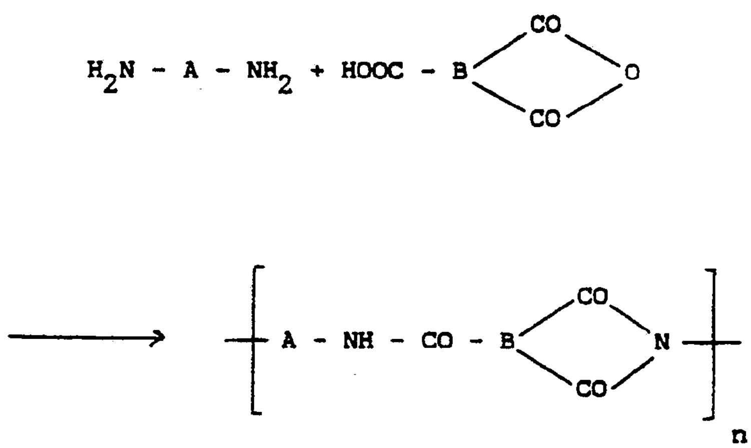

avec A représentant un groupement divalent diorganopolysiloxane.

Il existe d'autres documents décrivant des polymères thermostables comprenant des unités imides et/ou amides et siloxanes (cf. notamment US-A-3.274.155, US-A-3.325.450, US-A-3.533.282, US-A-4.011.279) ; cependant, dans cet art antérieur, on ne trouve pas décrits les nouveaux copolymères séquencés selon la présente invention comprenant des blocs (imide-amide)et (urée-siloxane).

Plus précisément, la présente invention concerne des copolymères thermostables séquencés caractérisés par les points suivants :

• (1) ils comprennent dans leur structure :

— des blocs (imide-amide) de formule :

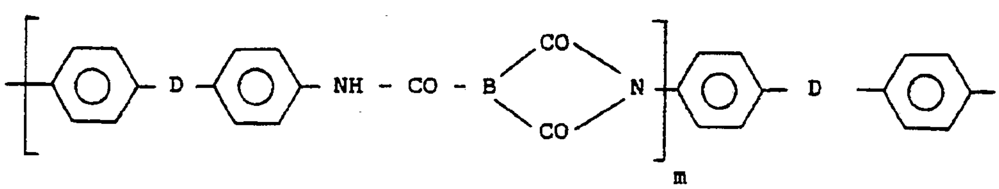 (I)

dans laquelle :

* D représente un lien valentiel simple ou un groupement :

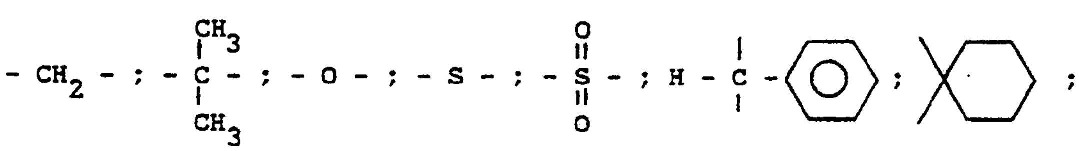

* B représente un radical trivalent consistant dans un radical aromatique substitué ou non ou dans deux de ces radicaux reliés entre eux par un lien valentiel simple ou un groupement :

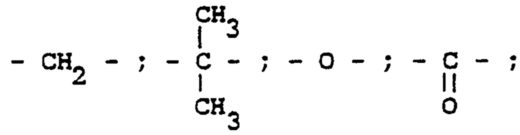

* m est un nombre positif égal au moins à 1, et se situant plus précisément dans l'intervalle allant de 1 à 10 ;

— et des blocs (urée-siloxane) de formule :

—NH-CO-NH-A-NH-CO-NH— (II)

avec A représentant un radical divalent diorganosiloxane de formule :

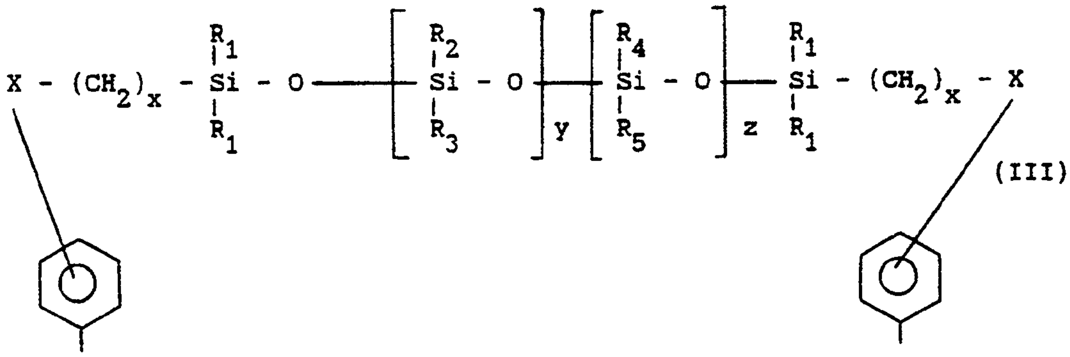

(III)

dans laquelle :

* X, qui est en position ortho, méta ou para par rapport à l'atome de carbone du cycle benzénique portant le lien valentiel, représente un atome ou groupement suivant :

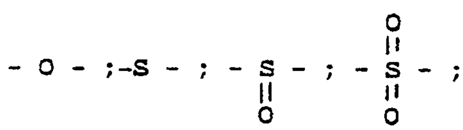

* $R_1$, $R_2$, $R_3$, $R_4$ et $R_5$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par un groupement —CN; un radical phényle éventuellement substitué par un ou plusieurs radicaux alkyles et/ou alkoxy ayant de 1 à 4 atomes de carbone ou par ou plusieurs atomes de chlore ;

* le symbole x est un nombre entier situé dans l'intervalle allant de 2 à 8 ;

* les symboles y et z représentent des nombres, identiques ou différents, entiers ou fractionnaires, dont la somme se situe dans l'intervalle allant de 0 à 100 ;

(2) ils sont obtenus en enchaînant dans un même réacteur les deux étapes suivantes :

— étape (a) dans laquelle :

* on prépare un oligomère à groupements isocyanates terminaux par chauffage, à une température allant de 50°C à 200°C et en présence d'un solvant organique ou mélange de solvants organiques, des réactifs (i) et (2i) suivants :

(i) étant un diisocyanate de formule :

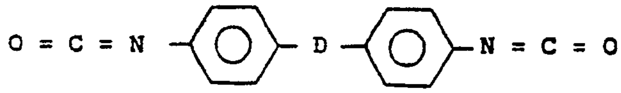

(IV)

dans laquelle D a la signification donnée ci-avant dans la formule (I), et (2i) étant un monoanhydride d'acide tricarboxylique de formule :

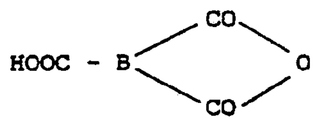

(V)

dans laquelle B a la signification donnée ci-avant dans la formule (I) ;

* les proportions des réactifs (i) et (2i) dont choisies de façon que le rapport :

$$\frac{\text{nombre de moles de diisocyanate (i)}}{\text{nombre de moles d'anhydride (2i)}}$$

se situe dans l'intervalle allant de 1,1 à 2 ;

* on opère un chauffage pendant une durée suffisante pour faire réagir la totalité des groupes fonctionnels de l'anhydride (2i) ;

— étape (b) dans laquelle :

* on fait réagir, à une température allant de 50°C à 160°C, le milieu réactionnel obtenu à l'issue de l'étape (a) renfermant l'oligomère à groupements isocyanates terminaux avec (3i) une diamine à groupement diorganopolysiloxane de formule :

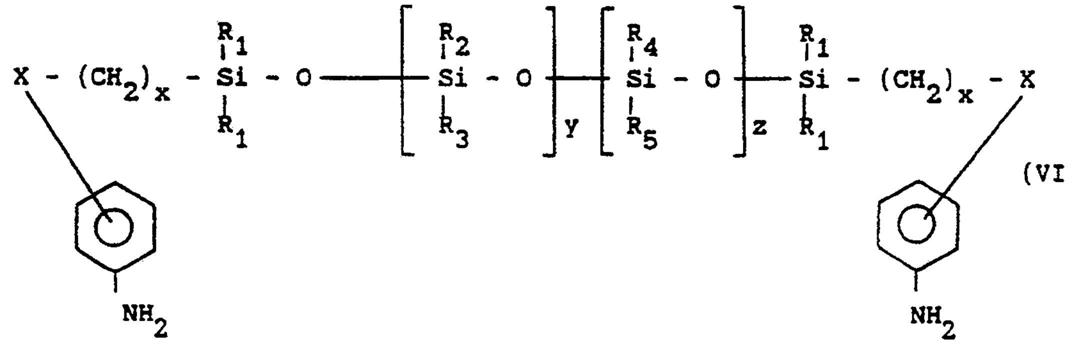

(VI)

dans laquelle X, $R_1$, $R_2$, $R_3$, $R_4$, $R_5$, x, y, et z ont les significations données ci-avant dans la formule (III) ;

* les proportions du réactif (3i) sont choisies de façon que le rapport :

$$\frac{\text{nombre de moles de diamine siloxane (3i)}}{\text{nombre de moles de diisocyanate (i) - nombre de moles d'anhydride (2i)}}$$

se situe dans l'intervalle allant de 0,5 à 1.

S'agissant de la formule des copolymères séquencés selon l'invention, il doit être compris, si l'on désigne par $B_1$ un bloc (imide-amide) de formule (I) et par $B_2$ un bloc (urée-siloxane) de formule (II), qu'elle est essentiellement la suivante :

$$-\left[ B_1 - B_2 \right]_p-$$

avec p représentant un nombre positif allant de 1 à 100.

A titre d'exemples spécifiques de diisocyanate (i) de formule (IV) qui conviennent bien, on peut citer en particulier :

- le diisocyanato-4,4'-diphényl-2,2-propane,
- le diisocyanato-4,4'-diphénylméthane,
- le diisocyanato-4,4'-biphényle,
- le diisocyanato-4,4'-diphénylsufure,
- le diisocyanato-4,4'-diphénylsulfone,
- le diisocyanato-4,4'-diphényléther,
- le diisocyanato-4,4'-diphényl-1,1-cyclohexane.

On utilise de préference, pour la mise en oeuvre de la présente invention, le diisocyanato-4,4'-diphénylméthane et le diisocyanato-4,4'-diphényléther.

A titre d'exemples spécifiques de monoanhydrides d'acides tricarboxyliques(2i) de formule (V) qui conviennent bien, on peut citer en particulier :

- le monoanhydride d'acide trimellique,
- le monoanhydride-2,3 d'acide naphtalène-tricarboxylique-2,3,6,
- le monoanhydride-1,8 d'acide naphtalène-tricarboxylique-1,8,4,
- le monoanhydride-1,2 d'acide naphtalène-tricarboxylique-1,2,5,
- le monoanhydride-3,4 d'acide diphényl-tricarboxylique-3,4,4',
- le monoanhydride-3,4 d'acide diphényl-sulfone-tricarboxylique-3,4,3'
- le monoanhydride-3,4 d'acide diphényl-éther-tricarboxylique-3,4,4',
- le monoanhydride-3,4 d'acide benzophénone-tricarboxylique-3,4,4',
- le monoanhydride-3,4 d'acide diphényl-isopropylidène-tricarboxylique-3,4,3'.

On utilise de préference, pour la mise en oeuvre de la présente invention, le monoanhydride d'acide trimellique.

A propos des diamines siloxanes (3i) de formule (VI), lorsque y et/ou z sont supérieurs à 1, on est en présence d'un composé à structure polymère et on a rarement un seul composé, mais le plus souvent un mélange de composés de même structure chimique, qui diffèrent par le nombre d'unités récurrentes de leur molécule ; cela conduit à une valeur moyenne de y et/ou z qui peut être entière ou fractionnaire.

Comme diamines préférentiellement représentatives, on peut citer celles qui répondent à la formule (VI) dans laquelle :

1. X = —O— ; $R_1$, $R_2$, $R_3$, $R_4$ et $R_5$, identiques ou différents, représentent chacun un radical alkyle, linéaire ou ramifié, ayant de 1 à 6 atomes de carbone ; x = 2, 3, 4 ou 5 ; y + z se situe dans l'intervalle allant de 0 à 100 et, de préference, de 4 à 70 ;
2. X = —O— ; $R_1$, $R_2$, $R_3$, identiques ou différents, représentent chacun un radical alkyle linéaire ou ramifié, ayant de 1 à 6 atomes de carbone ; $R_4$, $R_5$ représentent chacun un radical phényle ; x = 2, 3, 4 ou 5 ; y + z se situe dans l'intervalle allant de 0 à 100 et, de préference, de 4 à 70 ;
3. X = —O— ; $R_1$, $R_2$, $R_4$, identiques ou différents, représentent chacun un radical alkyle, linéaire ou ramifié, ayant de 1 à 6 atomes de carbone ; $R_3$, $R_5$ représentent chacun un radical phényle ; x = 2, 3, 4 ou 5 ; représentent y + z se situe dans l'intervalle allant de 0 à 100 et, de préference, de 4 à 70 ;
4. X = —O— ; $R_1$ représente un radical alkyle linéaire ou ramifié, ayant de 1 à 6 atomes de carbone ; $R_2$, $R_3$, $R_4$ et $R_5$ représentent chacun un radical phényle ; x = 2, 3, 4 ou 5 ; y + z se situe dans l'intervalle allant de 0 à 100 et, de préference, de 4 à 70.

Comme diamines encore plus préférentiellement représentatives, on peut citer celles qui répondent à la formule (VI) dans laquelle :

5. X = —O— ; $R_1 = R_2 = R_3 = R_4 = R_5$ = radical alkyle linéaire ayant de 1 à 3 atomes de carbone ; x = 2, 3 ou 4 ; y + z se situe dans l'intervalle allant de 0 à 100 et, de préference, de 4 à 70 ;
6. X = —O— ; $R_1 = R_2 = R_3$ = radical alkyle linéaire ayant de 1 à 3 atomes de carbone ; $R_4 = R_5$ radical phényle ; x = 2, 3 ou 4 ; y + z se situe dans l'intervalle allant de 0 à 100 et, de préférence, de 4 à 70 ;
7. X = —O— ; $R_1 = R_2 = R_4$ = radical alkyle linéaire ayant de 1 à 3 atomes de carbone ; $R_3 = R_5$ = un radical phényle ; x = 2, 3 ou 4 ; y+ z se situe dans l'intervalle allant de 0 à 100 et, de préférence, de 4 à 70 ;
8. X = —O— ; $R_1$ = alkyle linéaire ayant de 1 à 3 atomes de carbone ; $R_2 = R_3 = R_4 = R_5$ = radical phényle; x = 2, 3 ou 4 ; y + z se situe dans l'intervalle allant de 0 à 100 et, de préférence, de 4 à 70.

Comme diamines qui sont tout particulièrement représentatives, on peut citer celles qui répondent à la formule (VI) dans laquelle :

9. X = —O— ; $R_1 = R_2 = R_3 = R_4 = R_5$ = radical méthyle ; x = 3 ; y+ z se situe dans l'intervalle allant de 0 à 100 et, de préférence, de 4 à 70 ;

10. X = —O— ; $R_1 = R_2 = R_3$ = radical méthyle ; $R_4 = R_5$ = radical phényle ; x = 3 ; y + z se situe dans l'intervalle allant de 0 à 100 et, de préférence, de 4 à 70 ;

11. X = —O— ; $R_1 = R_2 = R_4$ = radical méthyle ; $R_3 = R_5$ = radical phényle ; x = 3 ; y + z se situe dans l'intervalle allant de 0 à 100 et, de préférence, de 4 à 70 ;

12. X = —O— ; $R_1$ = radical méthyle ; $R_2 = R_3 = R_4 = R_5$ = radical phényle ; x = 3 ; y + z se situe dans l'intervalle allant de 0 à 100 et, de préférence, de 4 à 70.

Comme exemples spécifiques de diamines siloxanes tout particulièrement représentatives, on citera notamment :

13. 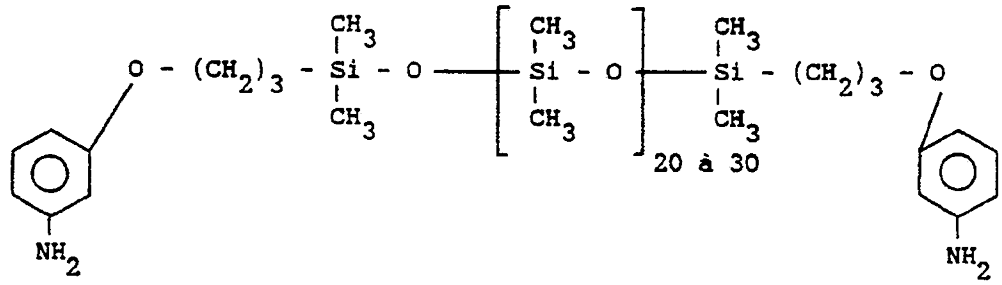

14. 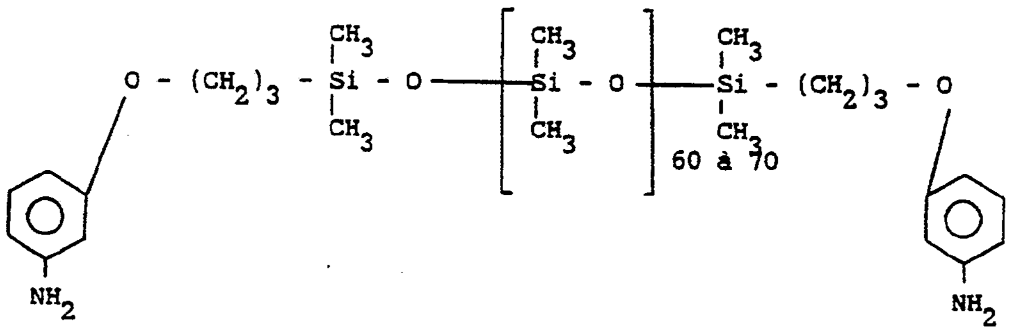

15. 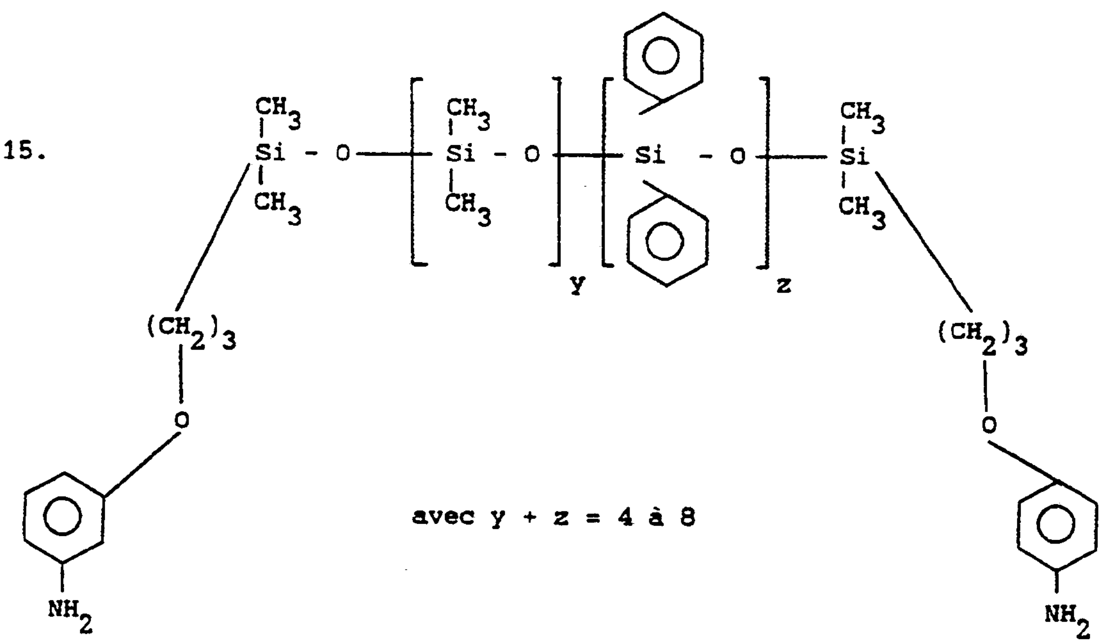

avec y + z = 4 à 8

16. 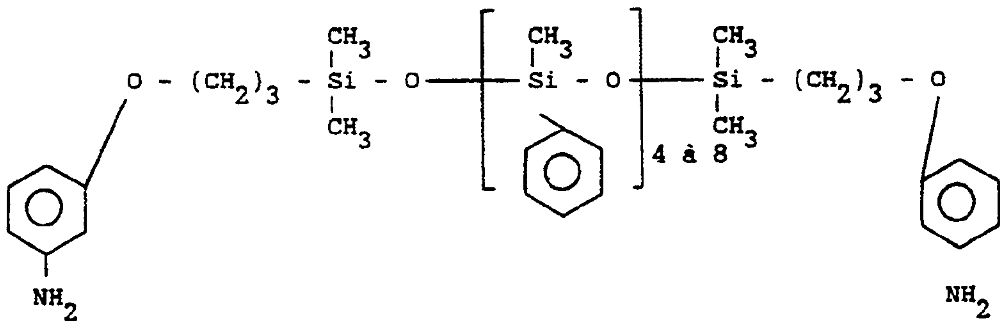

On utilise de préférence comme diamines (3i) de formule (VI) celles où le groupement diorganopolysiloxane renferme à la fois des liaisons Si-alkyle (ou Si-alkyle substitué) et des liaisons Si-phényle (ou Si-phényle substitué). Des composés de ce type qui conviennent sont ceux appartenant aux groupes suivants, classés par ordre croissant de préférence :

— composés n° 2, 3 et 4 ;
— composés n° 6, 7 et 8 ;
— composés n° 10, 11 et 12.

Les diamines (3i) de formule (VI) à groupement diorganopolysiloxane sont des composés qui sont bien connus dans l'art antérieur. Elles sont par exemple décrites dans le brevet anglais GB-B-1.062.418 et dans le brevet américain US-A-4.395.527.

Selon ces documents, une première méthode de préparation de ces diamines, applicable en particulier lorsque l'on peut obtenir un composé de formule (VI) où y = z = 0, c'est à dire lorsque l'on peut obtenir une diamine à groupement diorganopolysiloxane, consiste à faire réagir un composé de formule

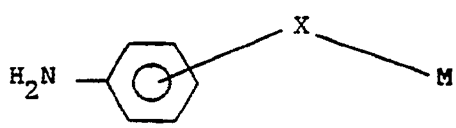

où X a la signification donnée ci-avant et M est un métal alcalin ou alcalino-terreux, avec un bis(halogénoalkyl)disiloxane de formule :

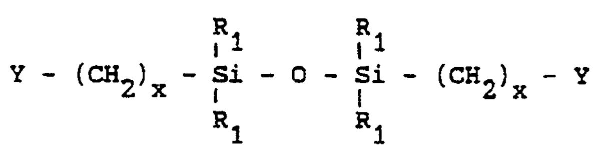

où x a la valeur indiquée ci-avant et Y est un atome de chlore, de brome ou d'iode, en opérant à une température comprise entre 20° et 200°C en présence d'un solvant polaire aprotique.

Dans le cas où l'on veut obtenir une diamine (3i) de formule (VI) où y et/ou z sont différents de zéro, une seconde méthode de préparation enseignée par ces documents consiste à copolymériser une mole de diamine à groupement diorganopolysiloxane, préparée comme indiqué ci-dessus, avec une quantité d'un ou plusieurs diorganopolysiloxanes cycliques capables de donner y moles de groupes siloxy de formule :

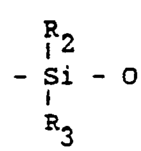

et/ou z moles de groupes siloxy de formule :

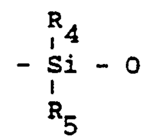

En général, la réaction se déroule à une température comprise entre 80° et 250°C en présence là aussi d'un solvant et éventuellement d'un catalyseur approprié.

Une autre façon de préparer les diamines (3i) de formule (VI), avec y et/ou z étant égaux à zéro ou différents de zéro, est de faire réagir sur un composé à insaturation éthylénique de formule :

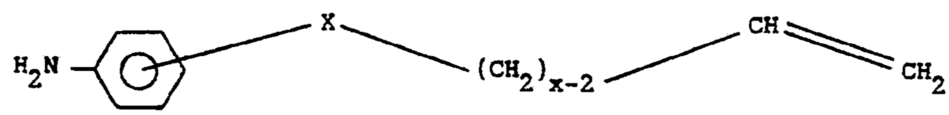

dans laquelle X, qui est en position ortho, méta ou para par rapport à l'atome de carbone du cycle benzénique relié à l'azote, et x ont les significations données ci-avant, un alpha, oméga-bis(hydrogéno) diorganopolysiloxane de formule :

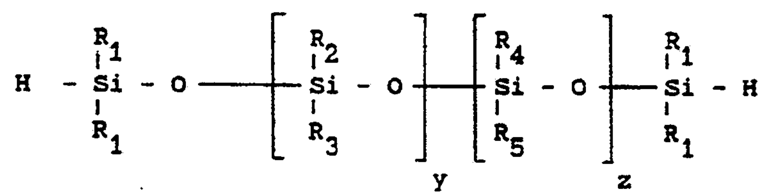

dans laquelle $R_1$, $R_2$, $R_3$, $R_4$, $R_5$, y et z ont les significations données ci-avant. Cette réaction d'hydrosilylation est conduite en opérant en masse en absence de solvant et en utilisant un catalyseur à base de platine. Les alpha, oméga-bis(hydrogéno)diorganopolysiloxanes mis en oeuvre sont des produits bien connus dans l'industrie des silicones et sont, pour certains, disponibles dans le commerce. Ils sont par exemple décrits dans les brevets français FR-A1-2.486.952 et FR-A5-2.058.988.

Quand on choisit de faire appel à cette réaction d'hydrosilylation pour préparer une diamine (3i) de formule (VI), le substrat aminé à insaturation éthylénique qui est bien adapté pour réagir avec l'alpha, oméga-bis-(hydrogéno)diorganopolysiloxane consiste notamment dans une allyloxyaniline de formule :

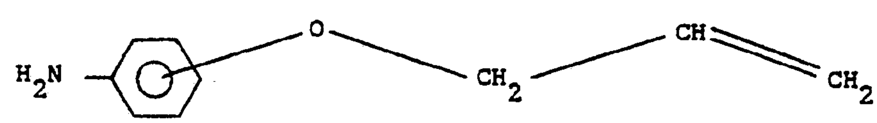

Dans ces conditions privilégiées, on est donc conduit à des diamines (3i) de formule (VI) où X = —O—, x = 3 et $R_1$, $R_2$, $R_3$, $R_4$, $R_5$, y et z ont les significations générales ou précises données ci-avant.

La réaction de l'étape (a) du procédé permettant de préparer les copolymères selon la présente invention est conduite en milieu homogène par addition aux réactifs (i) et (2i) d'un solvant ou mélange de solvants communs aux réactifs et au produit formé. Les solvants qui conviennent bien sont les solvants polaires, en particulier la N,N-diméthyl-acétamide, le N,N-diméthylformamide, la N-méthyl-pyrrolidone-2, le diméthyl-sulfoxyde et un mélange de ces solvants ; ils doivent de plus être parfaitement anhydres. La réaction de polymérisation est effectuée à une température comprise entre 50°C et 200°C ; les meilleurs résultats sont obtenus à des températures comprises entre 90°C et 160°C. De manière préférentielle, les proportions des réactifs (i)

et (2i) sont choisies de façon que le rapport :

$$\frac{\text{nombre de moles de diisocyanate (i)}}{\text{nombre de moles d'anhydride (2i)}}$$

se situe dans l'intervalle allant de 1,1 à 1,5. Généralement, lorsque l'on opère à une température comprise entre 90°C et 160°C, la totalité des groupes fonctionnels de l'anhydride (2i) a réagi au bout de 2 à 3 heures. Pratiquement, on dissout les réactifs de départ dans le (ou les) solvant(s) en opérant éventuellement à chaud, puis on porte la solution obtenue à la température désirée directement ou progressivement sous pression normale ou sous un vide adéquat.

Dans l'étape (b), la diamine siloxane (3i) peut être mise en oeuvre sous forme de solution dans un solvant ou mélange de solvants tels que ceux indiqués ci-avant à propos de l'étape (a). Cette seconde étape est conduite à une température qui est, de préférence, comprise entre 90°C et 120°C. De manière préférentielle encore, les proportions de diamine (3i) sont choisies de façon que le rapport :

$$\frac{\text{nombre de moles de diamine siloxane (3i)}}{\text{nombre de moles de diisocyanate (i) - nombre de moles d'anhydride (2i)}}$$

se situe dans l'intervalle allant de 0,65 à 0,95. Généralement, lorsque l'on opère à une température comprise entre 90°C et 120°C, la totalité des groupes amino à réagi au bout de 1 heure 30 minutes à 2 heures.

En fin d'étape (b) le copolymère est obtenu sous forme de solution. On peut le faire précipiter par addition dans le milieu réactionnel d'un non-solvant ou d'un mélange de non-solvants et séparer le copolymère précipité du milieu réactionnel. Les non-solvants convenables sont par exemple l'eau, l'acétone, le tétrahydrofuranne, le toluène ou tout autre solvant ne solubilisant pas le copolymère souhaité. Il est aussi possible d'obtenir le copolymère par évaporation du (ou des) solvant(s) du milieu réactionnel dans une étuve ventilée.

Ces copolymères se prêtent bien à la fabrication notamment de fibres, de films de revêtement, de vernis isolants et cela soit lors de l'évaporation, soit ultérieurement.

Les exemples qui suivent sont donnés à titre illustratif, mais non limitatif.

EXEMPLE 1

1. Exemple de mise en oeuvre de la présente invention :

1.1 Etape (a) :

Dans un réacteur en verre, muni d'un agitateur de type ancre et d'un réfrigérant ascendant, dans lequel on établit une légère surpression d'azote sec et qui est préchauffé à 100°C à l'aide d'un bain d'huile approprié, on introduit successivement :

- 7 g (0,0365 mole) de monoanhydride d'acide trimellique,
- 11,9 g (0,0472 mole) de diisocyanato-4,4'-diphényléther, et
- 63 g de N-méthyl-pyrrolidone-2.

On laisse réagir pendant 2 heures sous agitation. Au bout de ce temps la température de réaction est élevée à 130°C et on laisse la réaction se poursuivre pendant 1 heure supplémentaire sous agitation. La température du milieu réactionnel est ensuite abaissée à 100°C pour mettre en oeuvre l'étape (b).

Par spectrométrie infra-rouge, on note la présence dans le mélange réactionnel de bandes C = O imides à = 1710-1770 $cm^{-1}$ et l'absence de bande C = O anhydride à = 1850 $cm^{-1}$.

1.2 Etape (b) :

On additionne dans le milieu réactionnel obtenu à l'issue de l'étape (a) 9 g (0,0072 mole) de la diamine à groupement diorganopolysiloxane qui est décrite dans le paragraphe 2 ci-après, cette diamine étant mise en oeuvre sous forme de solution dans 48,6 g de N-méthyl-pyrrolidone-2. On laisse réagir pendant 2 heures à 100°C et sous agitation.

La solution de copolymère ainsi obtenue est une masse liquide de couleur rouge sombre ayant un poids de 136 g (elle renferme 24,7 g de copolymère). Par analyse infra-rouge, on ne détecte pas d'amine primaire dans la solution obtenue ; le taux de transformation de la diamine engagée est donc de 100%.

Le copolymère qui a été préparé sous forme de solution comprend dans sa structure :

— des blocs (imide-amide) de formule :

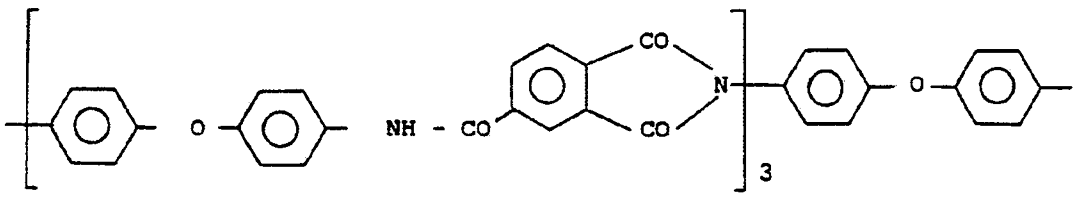

— et des blocs (urée-siloxane) de formule :

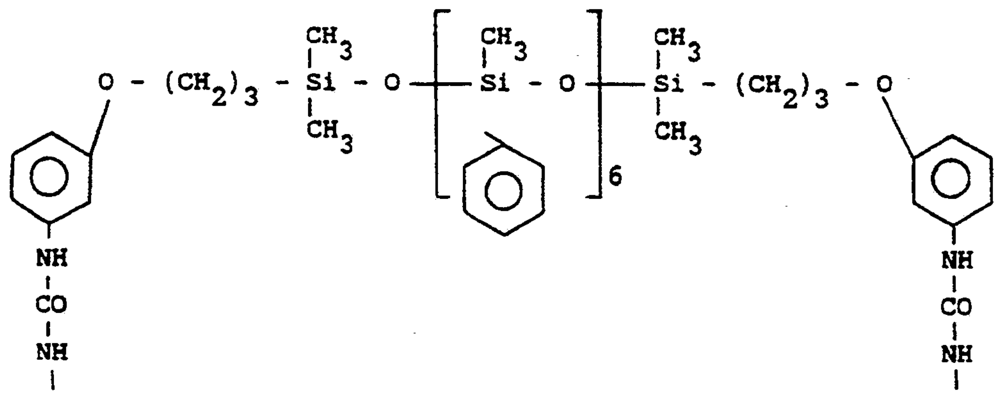

La solution du copolymère a été utilisée pour enduire une tresse de verre de type E désensimé de 5 cm de long. Cette tresse imprégnée est séchée sous un vide de $53{,}2.10^2$ Pa à 120°C pendant 12 heures. Cette tresse est ensuite soumise à une sollicitation dynamique en torsion à l'aide d'un pendule à fibre. On mesure ainsi la variation de rigidité de l'échantillon en fonction de la température, ce qui permet de déterminer les températures de transition vitreuse (Tg) du matériau. Les valeurs obtenues sont les suivantes :

— Tg des blocs (urée-siloxane) :–40°C

— Tg des blocs (imide-amide) : 160°C

2. Description du procédé de préparation de la diamine à groupement diorganopolysiloxane utilisée :

Cette diamine siloxane présente la formule suivante :

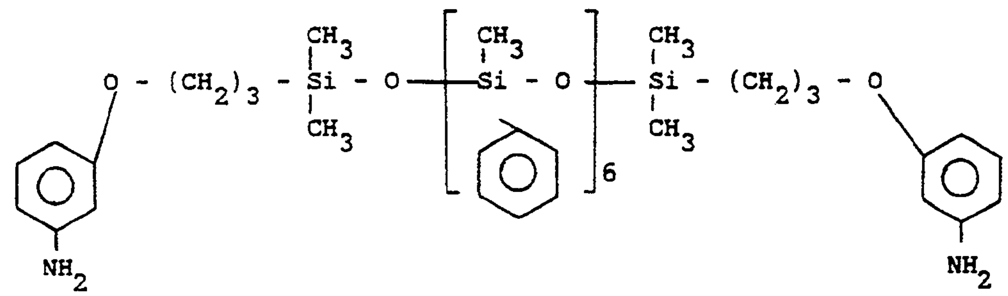

Dans un réacteur en verre muni d'une agitation centrale, d'une ampoule de coulée et d'un réfrigérant ascendant dans lequel on établit un légère surpression d'azote sec, on charge 346,3 g (0,37 mole) d'un alpha, oméga -bis(hydrogéno)polysiloxane de formule :

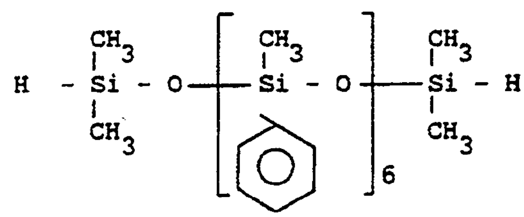

ayant une masse moléculaire de l'ordre de 936 g.

On introduit ensuite le réacteur dans un bain d'huile préchauffé à 55°C, puis on additionne le catalyseur. Ce dernier est le catalyseur de Karsted (complexe à base de platine élémentaire et de ligands divinyl-1,3 tétraméthyl-1,1,3,3 disiloxane) : il est en solution dans le toluène (concentration de 3,5% en poids) et on introduit avec une seringue 2,05 $cm^3$ de cette solution de catalyseur ; le rapport r (poids de platine élémentaire engagé/poids de la masse réactionnelle) est égale à $130.10^{-6}$.

Dans le réacteur, on coule ensuite progressivement 110,3 g (0,74 mole) de métaallyloxyaniline, pendant une durée de 60 minutes, de façon à contrôler l'exothermicité de la réaction. Trente minutes après la fin de la coulée, on revient à une température ambiante. Le produit obtenu, d'un poids de 456,5 g, est une huile visqueuse limpide, de couleur brun-orangé, présentant un spectre de RMN du proton en accord avec la structure de la diamine donnée ci-avant. La masse moléculaire est de l'ordre de 1248 g.

EXEMPLE 2

1. Etape (a) :

Dans le réacteur utilisé à l'exemple 1, on introduit successivement à 100°C :

— 11,9 g (0,062 mole) du monoanhydride d'acide trimellique,
— 18,1 g (0,0718 mole) de diisocyanato-4,4'-diphényléther, et
— 70 g de N-méthyl-pyrrolidone-2.

On laisse réagir pendant 1 heure à 100°C, puis 1 heure à 125°C et 1 heure à 150°C. La température est ensuite abaissée à 100°C en vue de la mise en oeuvre de l'étape (b).

Par spectrométrie infra-rouge on note, comme dans l'exemple 1, la présence dans le mélange réactionnel de bandes

C = O imide à = 1710-1770 $cm^{-1}$ et l'absence de bande

C = O anhydride à = 1850 $cm^{-1}$.

2. Etape (b) :

On additionne dans le milieu réactionnel obtenu à l'issue de l'étape (a) 10 g (0,0080 mole) de la diamine à groupement diorganopolysiloxane, qui est décrite ci-avant dans l'exemple 1, cette diamine étant là aussi mise en oeuvre sous forme de solution dans 90 g de N-méthyl-pyrrolidone-2. On laisse réagir, sous agitation, pendant 2 heures à 100°C.

La solution de copolymère ainsi obtenue est une masse liquide de couleur rouge sombre ayant un poids

de 194 g (elle renferme 34,5 g de copolymère). Là aussi le taux de transformation de la diamine engagée est de 100%.

Le copolymère qui a été préparé sous forme de solution comprend dans sa structure :

— des blocs (imide-amide) de formule :

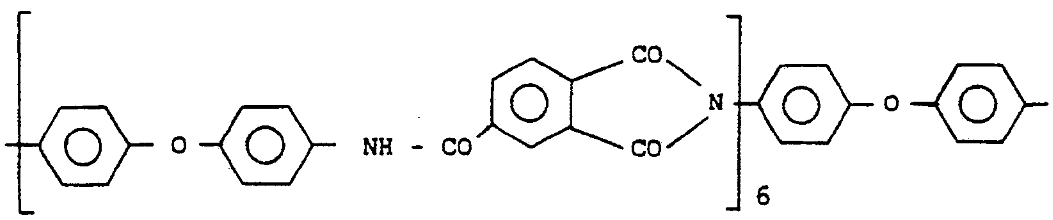

— et des blocs (urée-siloxane) de formule :

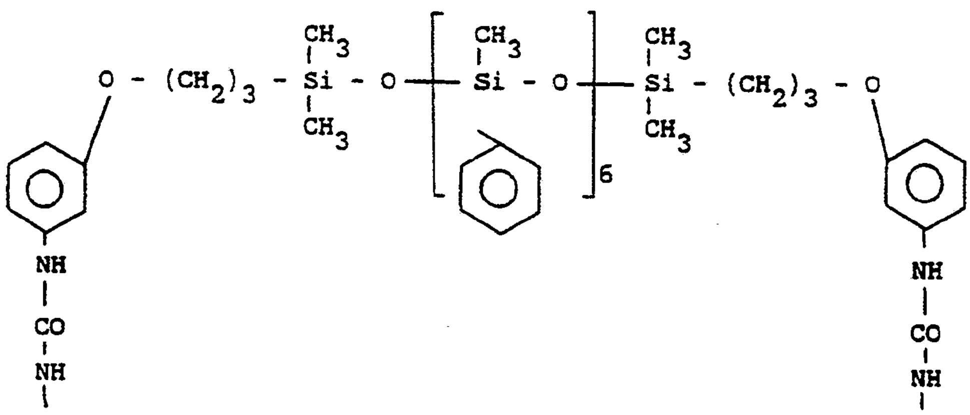

Les valeurs de Tg du copolymère, mesurées comme indiqué dans l'exemple 1, sont les suivantes :

— Tg des blocs (urée-siloxane) :-40°C

— Tg des blocs (imide-amide) : 210°C.

On prépare un film à partir de la solution du copolymère obtenue. La solution est coulée sur une plaque de verre en couche d'épaisseur 0,4 mm. La plaque est mise en étuve et on chauffe à 100°C sous un vide de $53,2.10^2$ Pa pendant 12 heures.

On obtient un film jaune opaque qui se détache facilement du support et qui présente les caractéristiques mécaniques en traction suivantes (mesurées selon les indications de la norme ASTM D 882) :

— module en traction : 1200 MPa

— résistance à la rupture : 65 MPa

— allongement à la rupture : 35%.

## Revendications

### Revendications pour les Etats contractants suivants : AT, BE, CH, DE, FR, GB, IT, LI, LU, NL, SE

1. Copolymères thermostables séquencés caractérisés par les points suivants :

•(1) ils comprennent dans leur structure :

— des blocs (imide-amide) de formule :

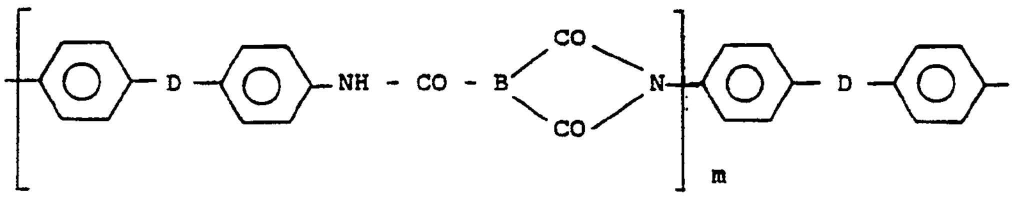

(I)

dans laquelle :

* D représente un lien valentiel simple ou un groupement :

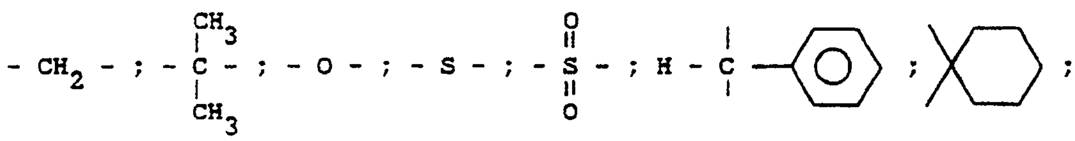

* B représente un radical trivalent consistant dans un radical aromatique substitué ou non ou dans deux de ces radicaux reliés entre eux par un lien valentiel simple ou un groupement :

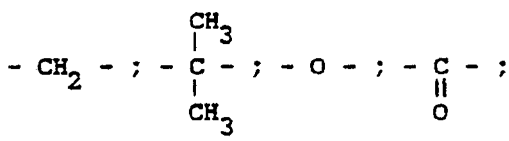

* m est un nombre positif égal au moins à 1 ;

— et des blocs (urée-siloxane) de formule :

—NH-CO-NH-A-NH-CO-NH— (II)

avec A représentant un radical divalent diorganosiloxane de formule :

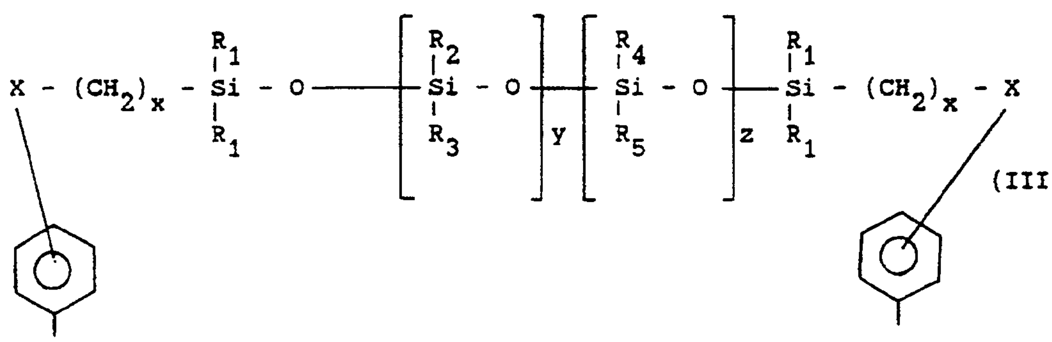

(III)

dans laquelle :

* X, qui est en position ortho, méta ou para par rapport à l'atome de carbone du cycle benzénique portant le lien valentiel, représente un atome ou groupement suivant :

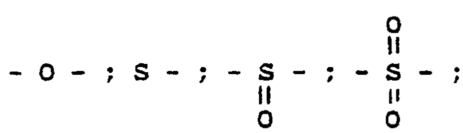

* $R_1$, $R_2$, $R_3$, $R_4$ et $R_5$, identiques ou différents, représentent chacun un radical hydrocarboné monovalent

choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par groupement —CN ; un radical phényle éventuellement substitué par un ou plusieurs radicaux alkyles et/ou alkoxy ayant de 1 à 4 atomes de carbone ou par un ou plusieurs atomes de chlore ;

* le symbole x est un nombre entier situé dans l'intervalle allant de 2 à 8 ;

* les symboles y et z représentent des nombres, identiques ou différents, entiers ou fractionnaires, dont la somme se situe dans l'intervalle allant de 0 à 100 ;

ledit procédé étant caractérisé en ce qu'il consiste à enchaîner dans un même réacteur les deux étapes suivantes :

— étape (a) dans laquelle :

* on prépare un oligomère à groupements isocyanates terminaux par chauffage, à une température allant de 50°C à 200°C et en présence d'un solvant organique ou mélange de solvants organiques, des réactifs (i) et (2i) suivants :

(i) étant un diisocyanate de formule :

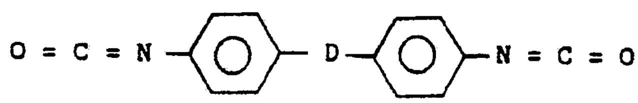

(IV)

dans laquelle D a la signification donnée ci-avant dans le formule (I),
et (2i) étant un monoanhydride d'acide tricarboxylique de formule :

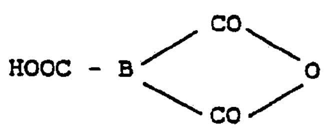

(V)

dans laquelle B a la signification donnée ci-avant dans la formule (I) ;

* les proportions des réactifs (i) et (2i) sont choisies de façon que le rapport :

$$\frac{\text{nombre de moles de diisocyanate (i)}}{\text{nombre de moles d'anhydride (2i)}}$$

se situe dans l'intervalle allant de 1,1 à 2 ;

* on opère un chauffage pendant une durée suffisante pour faire réagir la totalité des groupes fonctionnels de l'anhydride (2i) ;

— étape (b) dans laquelle :

* on fait réagir, à une température allant de 50°C à 160°C, le milieu réactionnel obtenu à l'issue de l'étape (a) renfermant l'oligomère à groupements isocyanate terminaux avec (3i) une diamine à groupement diorganopolysiloxane de formule :

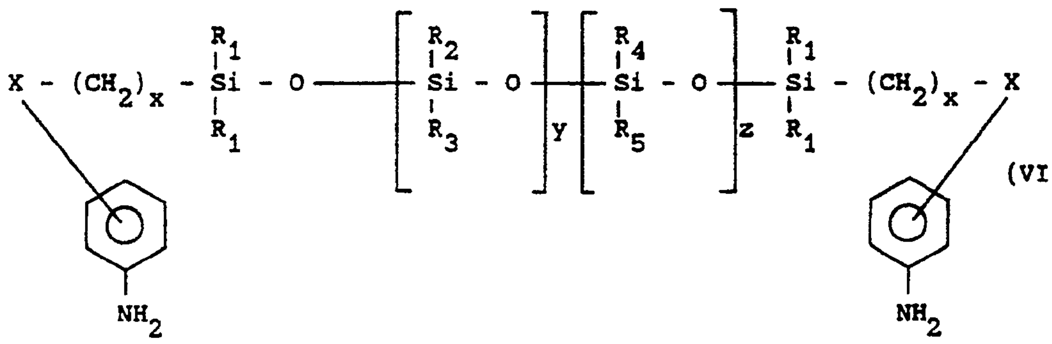

(VI)

dans laquelle X, $R_1$, $R_2$, $R_3$, $R_4$, $R_5$, x, y, et z ont les significations données ci-avant dans la formule (III) ;

* les proportions du réactif (3i) sont choisies de façon que le rapport :

$$\frac{\text{nombre de moles de diamine siloxane (3i)}}{\text{nombre de moles de diisocyanate (i) - nombre de moles d'anhydride (2i)}}$$

se situe dans l'intervalle allant de 0,5 à 1.

2. Copolymères selon la revendication 1, caractérisés en ce que le diisocyanate (i) de formule (IV) est choisi dans le groupe formé par :

— le diisocyanato-4,4'-diphényl-2,2-propane,
— le diisocyanato-4,4'-diphénylméthane,
— le diisocyanato-4,4'-biphényle,
— le diisocyanato-4,4'-diphénylsufure,
— le diisocyanato-4,4'-diphénylsulfone,
— le diisocyanato-4,4'-diphényléther,
— le diisocyanato-4,4'-diphényl-1,1-cyclohexane.

3. Copolymères selon l'une quelconque des revendications 1 et 2, caractérisés en ce que le monoanhydride d'acide tricarboxylique (2i) de formule (V) est choisi dans le groupe formé par :

— le monoanhydride d'acide trimellique,
— le monoanhydride-2,3 d'acide naphtalène-tricarboxylique-2,3,6,
— le monoanhydride-1,8 d'acide naphtalène-tricarboxylique-1,8,4,
— le monoanhydride-1,2 d'acide naphtalène-tricarboxylique-1,2,5,
— le monoanhydride-3,4 d'acide diphényl-tricarboxylique-3,4,4'
— le monoanhydride-3,4 d'acide diphényl-sulfone-tricarboxylique-3,4,3,
— le monoanhydride-3,4 d'acide diphényl-éther-tricarboxylique-3,4,4',
— le monoanhydride-3,4 d'acide benzaphénone-tricarboxylique-3,4,4',
— le monoanhydride-3,4 d'acide diphényl-isopropylidène-tricarboxylique-3,4,3'.

4. Copolymères selon l'une quelconque des revendications 1 à 3, caractérisés en ce que l'on utilise comme diamines (3i) de formule (VI) celles où le groupement diorganopolysiloxane renferme à la fois des liaisons Si-alkyle (ou Si-alkyle substitué) et des liaisons Si-phényle (ou Si-phényle substitué).

5. Copolymères selon la revendication 4, caractérisés en ce que les diamines (3i) mises en oeuvre sont celles qui répondent à la formule (VI) dans laquelle :

• X = —O— ; $R_1$, $R_2$, $R_3$, identiques ou différents, représentent chacun un radical alkyle linéaire ou ramifié, ayant de 1 à 6 atomes de carbone ; $R_4$, $R_5$ représentent chacun un radical phényle ; x = 2, 3, 4 ou 5 ; y + z se situe dans l'intervalle allant de 0 à 100 et, de préférence, de 4 à 70 ;

• X = —O— ; $R_1$, $R_2$, $R_4$, identiques ou différents, représentent chacun un radical alkyle, linéaire ou ramifié, ayant de 1 à 6 atomes de carbone ; $R_3$, $R_5$ représentent chacun un radical phényle ; x = 2, 3, 4 ou 5 représentent ; y + z se situe dans l'intervalle allant de 0 à 100 et, de préférence, de 4 à 70 ;

• X = —O— ; $R_1$ représente un radical alkyle linéaire ou ramifié, ayant de 1 à 6 atomes de carbone ; $R_2$, $R_3$, $R_4$ et $R_5$ représentent chacun un radical phényle ; x = 2, 3, 4 ou 5 ; y + z se situe dans l'intervalle allant de 0 à 100 et, de préférence, de 4 à 70.

6. Copolymères selon l'une quelconque des revendications 1 à 4, caractérisés en ce que les solvants mis en oeuvre dans l'étape (c) et éventuellement dans l'étape (b) sont la N,N-diméthyl-acétamide, le N,N-diméthylformamide, la N-méthyl-pyrrolidone-2, le diméthylsulfoxyde et un mélange de ces solvants.

**Revendications pour l'Etat contractant suivant : ES**

1. Procédé de préparation de copolymères thermostables séquencés qui comprennent dans leur structure:
— des blocs (imide-amide) de formule :

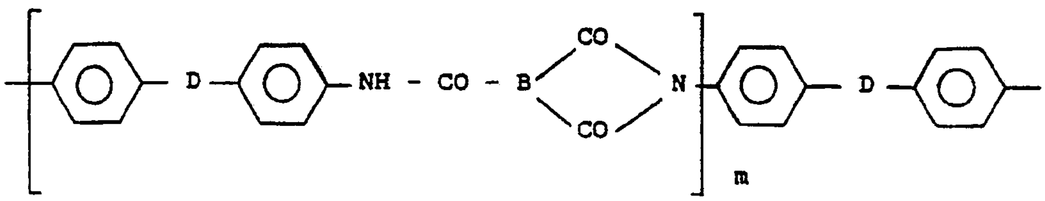
(I)

dans laquelle :
* D représente un lien valentiel simple ou un groupement :

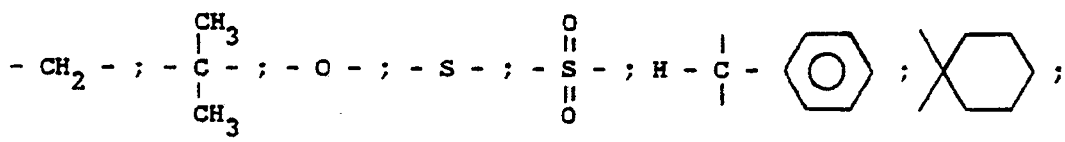

* B représente un radical trivalent consistant dans un radical aromatique substitué ou non ou dans deux de ces radicaux reliés entre eux par un lien valentiel simple ou un groupement :

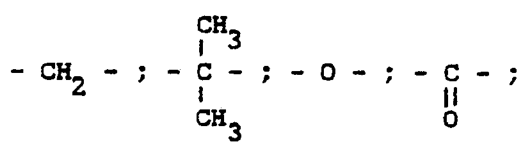

* m est un nombre positif égal au moins à 1 ;
— et des blocs (urée-siloxane) de formule :

—NH-CO-NH-A-NH-CO-NH— (II)

avec A représentant un radical divalent diorganosiloxane de formule :

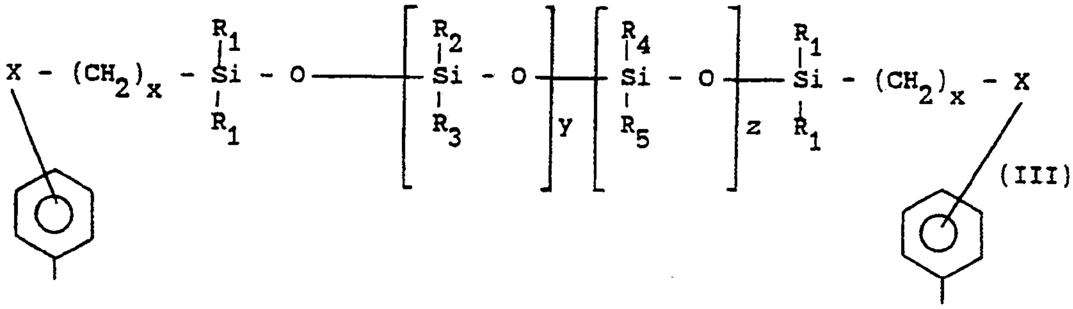
(III)

dans laquelle :
* X, qui est en position ortho, méta ou para par rapport à l'atome de carbone du cycle benzénique portant le lien valentiel, représente un atome ou groupement suivant :

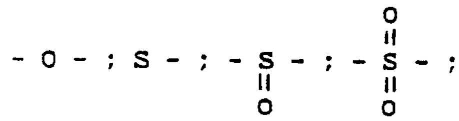

* $R_1$, $R_2$, $R_3$, $R_4$ et $R_5$, identiques ou différents, représentent chacun un radical hydrocarboné monovalent choisi parmi : les radicaux alkyles, linéaires ou ramifiés, ayant de 1 à 12 atomes de carbone, ces radicaux pouvant être substitués par un ou plusieurs atomes de chlore, de brome ou de fluor ou par groupement —CN ; un radical phényle éventuellement substitué par un ou plusieurs radicaux alkyles et/ou alkoxy ayant de 1 à 4 atomes de carbone ou par un ou plusieurs atomes de chlore ;

* le symbole x est un nombre entier situé dans l'intervalle allant de 2 à 8 ;

* les symboles y et z représentent des nombres, identiques ou différents, entiers ou fractionnaires, dont la somme se situe dans l'intervalle allant de 0 à 100 ;

(2) ils sont obtenus en enchaînant dans un même réacteur les deux étapes suivantes :

— étape (a) dans laquelle :

* on prépare un oligomère à groupements isocyanates terminaux par chauffage, à une température allant de 50°C à 200°C et en présence d'un solvant organique ou mélange de solvants organiques, des réactifs (i) et (2i) suivants :

(i) étant un diisocyanate de formule :

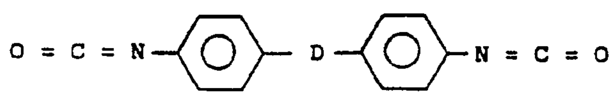 (IV)

dans laquelle D a la signification donnée ci-avant dans le formule (I),
et (2i) étant un monoanhydride d'acide tricarboxylique de formule :

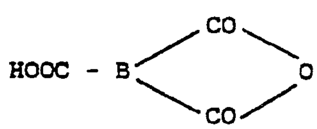 (V)

dans laquelle B a la signification donnée ci-avant dans la formule (I) ;

* les proportions des réactifs (i) et (2i) sont choisies de façon que le rapport :

$$\frac{\text{nombre de moles de diisocyanate (i)}}{\text{nombre de moles d'anhydride (2i)}}$$

se situe dans l'intervalle allant de 1,1 à 2 ;

* on opère un chauffage pendant une durée suffisante pour faire réagir la totalité des groupes fonctionnels de l'anhydride (2i) ;

— étape (b) dans laquelle :

* on fait réagir, à une température allant de 50°C à 160°C, le milieu réactionnel obtenu à l'issue de l'étape (a) renfermant l'oligomère à groupements isocyanate terminaux avec (3i) une diamine à groupement diorganopolysiloxane de formule :

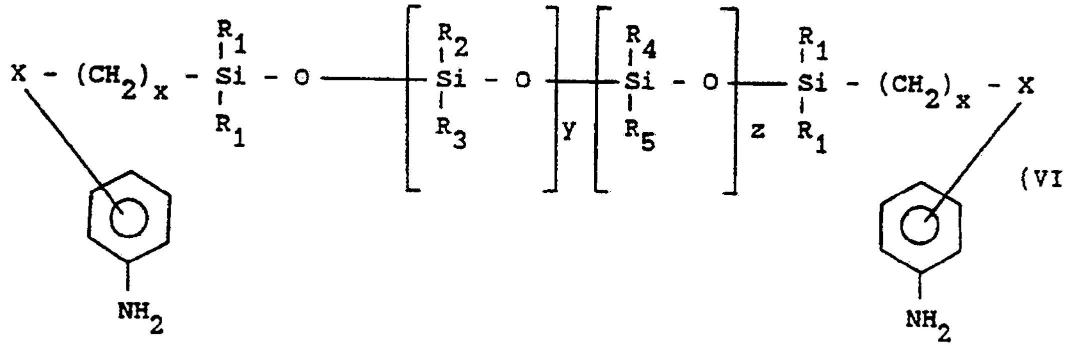

(VI)

dans laquelle X, $R_1$, $R_2$, $R_3$, $R_4$, $R_5$, x, y, et z ont les significations données ci-avant dans la formule (III) ;

* les proportions du réactif (3i) sont choisies de façon que le rapport :

$$\frac{\text{nombre de moles de diamine siloxane (3i)}}{\text{nombre de moles de diisocyanate (i) - nombre de moles d'anhydride (2i)}}$$

se situe dans l'intervalle allant de 0,5 à 1.

2. Procédé selon la revendication 1, caractérisés en ce que le diisocyanate (i) de formule (IV) est choisi dans le groupe formé par :

— le diisocyanato-4,4'-diphényl-2,2-propane,
— le diisocyanato-4,4'-diphénylméthane,
— le diisocyanato-4,4'-biphényle,
— le diisocyanato-4,4'-diphénylsufure,
— le diisocyanato-4,4'-diphénylsulfone,
— le diisocyanato-4,4'-diphényléther,
— le diisocyanato-4,4'-diphényl-1,1-cyclohexane.

3. Procédé selon l'une quelconque des revendications 1 et 2, caractérisés en ce que le monoanhydride d'acide tricarboxylique (2i) de formule (V) est choisi dans le groupe formé par :

— le monoanhydride d'acide trimellique,
— le monoanhydride-2,3 d'acide naphtalène-tricarboxylique-2,3,6,
— le monoanhydride-1,8 d'acide naphtalène-tricarboxylique-1,8,4,
— le monoanhydride-1,2 d'acide naphtalène-tricarboxylique-1,2,5,
— le monoanhydride-3,4 d'acide diphényl-tricarboxylique-3,4,4'
— le monoanhydride-3,4 d'acide diphényl-sulfone-tricarboxylique-3,4,3',
— le monoanhydride-3,4 d'acide diphényl-éther-tricarboxylique-3,4,4',
— le monoanhydride-3,4 d'acide benzaphénone-tricarboxylique-3,4,4',
— le monoanhydride-3,4 d'acide diphényl-isopropylidène-tricarboxylique-3,4,3'.

4. Procédé selon l'une quelconque des revendications 1 à 3, caractérisés en ce que l'on utilise comme diamines (3i) de formule (VI) celles où le groupement diorganopolysiloxane renferme à la fois des liaisons Si-alkyle (ou Si-alkyle substitué) et des liaisons Si-phényle (ou Si-phényle substitué).

5. Procédé selon la revendication 4, caractérisés en ce que les diamines (3i) mises en oeuvre sont celles qui répondent à la formule (VI) dans laquelle :

• X = —O— ; $R_1$, $R_2$, $R_3$, identiques ou différents, représentent chacun un radical alkyle linéaire ou ramifié, ayant de 1 à 6 atomes de carbone ; $R_4$, $R_5$ représentent chacun un radical phényle ; x = 2, 3, 4 ou 5 ; y + z se situe dans l'intervalle allant de 0 à 100 et, de préférence, de 4 à 70 ;

• X = —O— ; $R_1$, $R_2$, $R_4$, identiques ou différents, représentent chacun un radical alkyle, linéaire ou ramifié, ayant de 1 à 6 atomes de carbone ; $R_3$, $R_5$ représentent chacun un radical phényle ; x = 2, 3, 4 ou 5 représentent ; y + z se situe dans l'intervalle allant de 0 à 100 et, de préférence, de 4 à 70 ;

• X = —O— ; $R_1$ représente un radical alkyle linéaire ou ramifié, ayant de 1 à 6 atomes de carbone ; $R_2$, $R_3$, $R_4$ et $R_5$ représentent chacun un radical phényle ; x = 2, 3, 4 ou 5 ; y + z se situe dans l'intervalle allant de 0 à 100 et, de préférence, de 4 à 70.

6. Procédé selon l'une quelconque des revendications 1 à 4, caractérisés en ce que les solvants mis en oeuvre dans l'étape (c) et éventuellement dans l'étape (b) sont la N,N-diméthyl-acétamide, le N,N-diméthylformamide, la N-méthyl-pyrrolidone-2, le diméthylsulfoxyde et un mélange de ces solvants.

## Claims

**Claims for the following Contracting States : At, BE, CH, DE, FR, GB, IT, LI, LU, NL, SE**

1. Heatstable block copolymers characterized by the following points :
(1) they comprise, in their structure :
(imide-amide) blocks of the formula ;

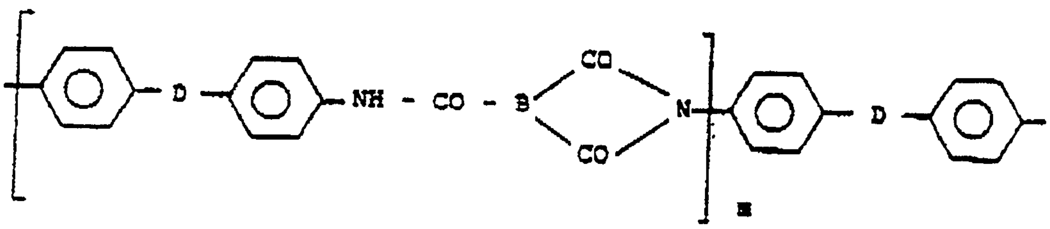

(I)

in which :

D represents a simple valency bond or a

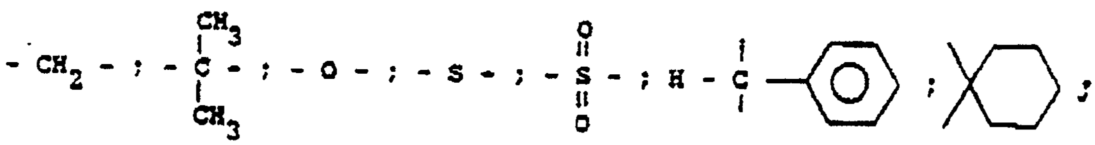

group,

B represents a trivalent radical consisting of a substituted or unsubstituted aromatic radical or of two of these radicals joined together by a simple valency bond or by a

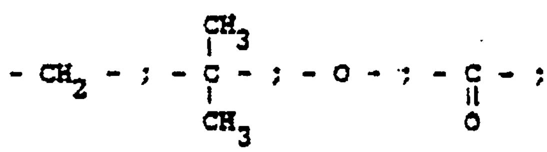

group, and

m is a positive number equal to at least 1, and (urea-siloxane) blocks of the formula :

—NH-CO-NH-A-NH-CO-NH— (II)

with A representing a divalent diorganosiloxane radical of the formula :

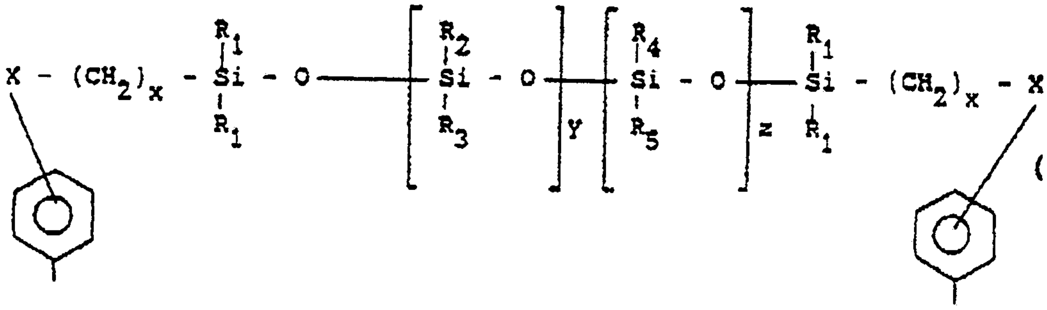

(III)

in which :

X, which is in the ortho, meta or para position relative to the carbon atom of the benzene ring carrying the valency bond, represents one of the following atoms or groups ;

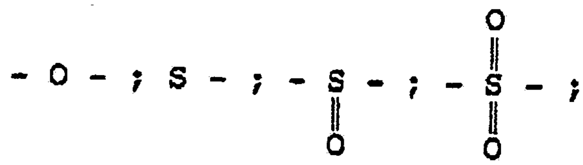

$R_1$, $R_2$, $R_3$, $R_4$ and $R_5$, which may be identical or different, each represent a monovalent hydrocarbon radical chosen from among the linear or branched alkyl radicals having from 1 to 12 carbon atoms, which radicals may be substituted by one or more chlorine, bromine or fluorine atoms or by a —CN group, or represent a phenyl radical optionally substituted by one or more alkyl and/or alkoxy radicals having from 1 to 4 carbon atoms or by one or more chlorine atoms,

the symbol x is an integer within the range from 2 to 8 and

the symbols y and z represent identical or different integral or fractional numbers, the sum of which is within the range from 0 to 100 ;

(2) they are obtained by carrying out the following two stages in sequence in one and the same reactor :

stage (a), in which :

an oligomer with terminal isocyanate groups is prepared by heating the reactants (i) and (2i) below, at a temperature ranging from 50°C to 200°C and in the presence of an organic solvent or a mixture of organic solvents:

(i) being a diisocyanate of the formula :

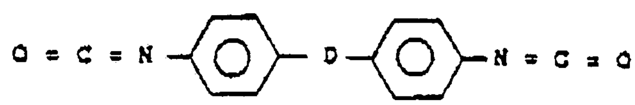

(IV)

in which D has the meaning given above in formula (I),

and (2i) being a tricarboxylic acid monoanhydride of the formula :

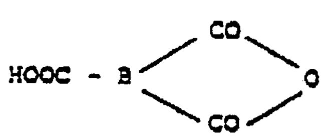

(V)

in which B has the meaning given above in formula (I), the proportions of reactants (i) and (2i) being so chosen that the ratio ;

$$\frac{\text{number of moles of diisocyanate (i)}}{\text{number of moles of anhydride (2i)}}$$

is in the range from 1.1 to 2, and

heating being carried out for a sufficient time to cause all the functional groups of the anhydride (2i) to react ; stage (b) in which : the reaction mixture obtained at the end of stage (a), containing the oligomer with terminal isocyanate groups, is reacted, at a temperature ranging from 50C to 160°C, with (3i) a diamine having a diorganopolysiloxane group of the formula :

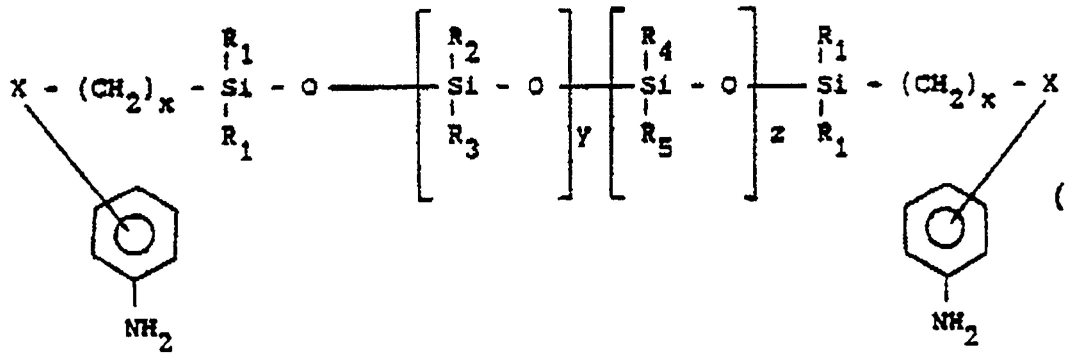

(VI)

in which X, $R_1$, $R_2$, $R_3$, $R_4$, $R_5$, x, y and z have the meanings given above in formula (III), the proportions of reactant (3i) being so chosen that the ratio

$$\frac{\text{number of moles of diaminesiloxane (3i)}}{\text{number of moles of diisocyanate (i)} - \text{number of moles of anhydride (2i)}}$$

is within the range from 0.5 to 1.

2. Copolymers according to Claim 1, characterized in that the diisocyanate (i) of the formula (IV) is chosen from the group consisting of :

4,4′-diisocyanato-2,2-diphenylpropane,
4,4′-diisocyanato-diphenylmethane,
4,4′-diisocyanato-biphenyl,
4,4′-diisocyanato-diphenyl sulphide,
4,4′-diisocyanato-diphenyl sulphone,
4,4′-diisocyanato-diphenyl ether, and
4,4′-diisocyanato-1,1-diphenylcyclohexane.

3. Copolymers according to either of Claims 1 and 2, characterized in that the tricarboxylic acid monoanhydride (2i) of the formula (V) is chosen from the group consisting of :

trimellitic acid monoanhydride,
naphthalene-2,3,6-tricarboxylic acid 2,3-monoanhydride,
naphthalene-1,8,4-tricarboxylic acid 1,8-monoanhydride,
naphthalene-1,2,5-tricarboxylic acid 1,2-monoanhydride,
diphenyl-3,4,4′-tricarboxylic acid 3,4-monoanhydride,
diphenyl sulphone-3,4,3′-tricarboxylic acid 3,4-monoanhydride,
diphenyl ether 3,4,4′-tricarboxylic acid 3,4-monoanhydride,
benzophenone-3,4,4′-tricarboxylic acid 3,4-monoanhydride, and
diphenyl-isopropylidene-3,4,3′-tricarboxylic acid 3,4monoanhydride.

4. Copolymers according to any one of Claims 1 to 3, characterized in that as diamines (3i) of the formula (VI) there are used those wherein the diorganopolysiloxane group contains both Si-alkyl (or substituted Si-alkyl) bonds and Si-phenyl (or substituted Si-phenyl) bonds.

5. Copolymers according to Claim 4, characterized in that the diamines (3i) employed are those which correspond to the formula (VI) in which :

X = —O— ; $R_1$, $R_2$ and $R_3$, which may be identical or different, each represent a linear or branched alkyl radical having from 1 to 6 carbon atoms ; $R_4$ and $R_5$ each represent a phenyl radical ; x = 2, 3, 4 or 5 ; y + z is in the range from 0 to 100 and preferably from 4 to 70 ;

X = —O— ; $R_1$, $R_2$ and $R_3$, which may be identical or different, each represent a linear or branched alkyl radical having from 1 to 6 carbon atoms ; $R_3$ and $R_5$ each represent a phenyl radical ; x = 2, 3, 4 or 5 ; y + z is in the range from 0 to 100 and preferably from 4 to 70 ;

X = —O— ; $R_1$ represents a linear or branched alkyl radical having from 1 to 6 carbon atoms ; $R_2$, $R_3$, $R_4$ and $R_5$ each represent a phenyl radical ; x = 2, 3, 4 or 5 ; y + z is in the range from 0 to 100 and preferably from 4 to 70.

6. Copolymers according to any one of Claims 1 to 4, characterized in that the solvents employed in stage (c) and optionally in stage (b) are N,N-dimethylacetamide, N,N-dimethylformamide, N-methyl-pyrrolid-2-one, dimethyl sulphoxide and a mixture of these solvents.

**Claims for the following Contracting State : ES**

1. Process for the preparation of heatstable block copolymers which comprise, in their structure ; (imide-amide) blocks of the formula :

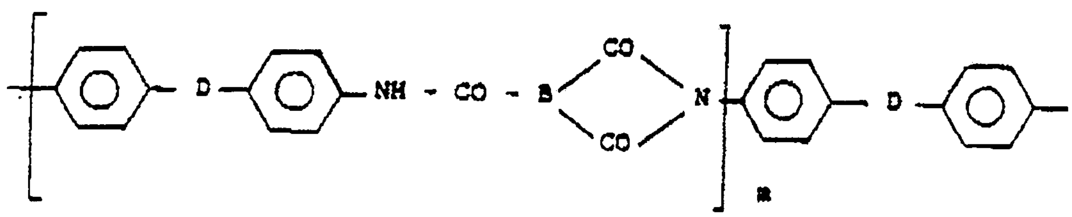 (I)

in which :

D represents a simple valency bond or a

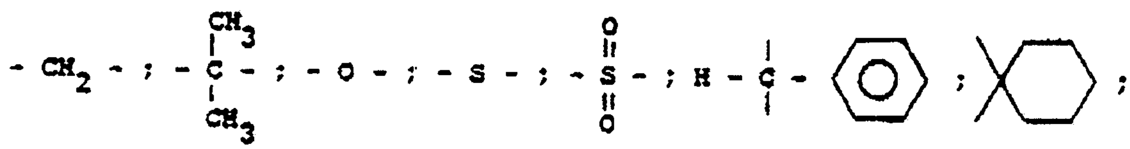

group,

B represents a trivalent radical consisting of a substituted or unsubstituted aromatic radical or of two of these radicals joined together by a simple valency bond or by a

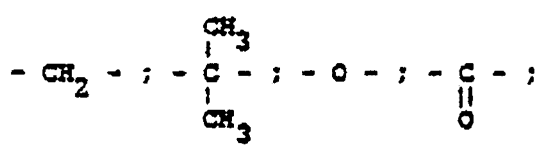

group, and

m is a positive number equal to at least 1, and (urea-siloxane) blocks of the formula :

—NH-CO-NH-A-NH-CO-NH— (II)

with A representing a divalent diorganosiloxane radical of the formula :

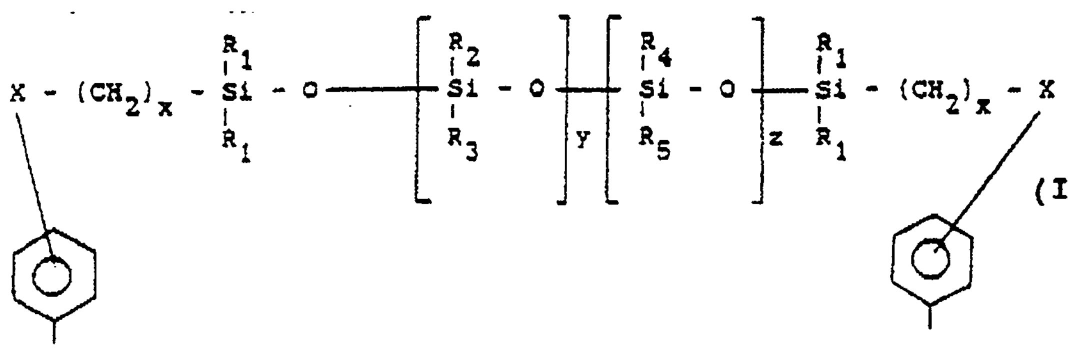

(III)

in which :

X, which is in the ortho, meta or para position relative to the carbon atom of the benzene ring carrying the valency bond, represents one of the following atoms or groups :

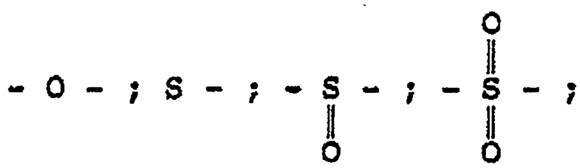

$R_1$, $R_2$, $R_3$, R, and $R_5$, which may be identical or different, each represent a monovalent hydrocarbon radical chosen from among the linear or branched alkyl radicals having from 1 to 12 carbon atoms, which radicals may be substituted by one or more chlorine, bromine or fluorine atoms or by a —CN group, or represent a phenyl radical optionally substituted by one or more alkyl and/or alkoxy radicals having from 1 to 4 carbon atoms or by one or more chlorine atoms,

the symbol x is an integer within the range from 2 to 8 and

the symbol x and z represent identical or different integral or fractional numbers, the sum of which is within the range from 0 to 100,

the said process being characterized in that it consistsin carrying out the following two stages in sequence in one and the same reactor :

stage (a), in which :

an oligomer with terminal isocyanate groups is prepared by heating the reactants (i) and (2i) below, at a temperature ranging from 50°C to 200°C and in the presence of an organic solvent or a mixture of organic solvents:

(i) being a diisocyanate of the formula :

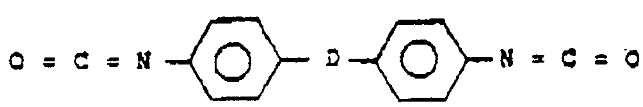

(IV)

in which D has the meaning given above in formula (I),

and (2i) being a tricarboxylic acid monoanhydride of the formula :

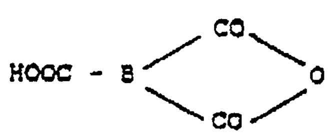

(V)

in which B has the meaning given above in formula (I), the proportions of reactants (i) and (2i) being so chosen that the ratio :

$$\frac{\text{number of moles of diisocyanate (i)}}{\text{number of moles of anhydride (2i)}}$$

is in the range from 1.1 to 2, and
heating being carried out for a sufficient time to cause all the functional groups of the anhydride (2i) to react ;
stage (b) in which :
the reaction mixture obtained at the end of stage (a), containing the oligomer with terminal isocyanate groups, is reacted, at a temperature ranging from 50°C to 160°C, with (3i) a diamine having a diorganopolysiloxane group of the formula :

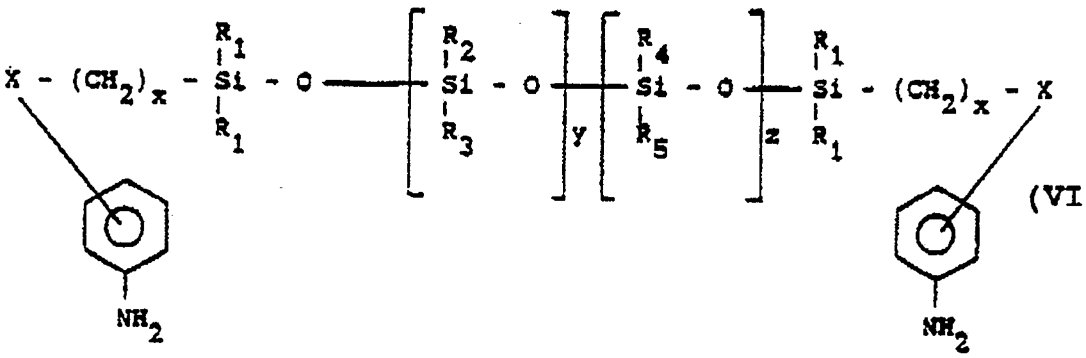

(VI)

in which X, $R_1$, $R_2$, $R_3$, $R_4$, $R_5$, x, y and z have the meanings given above in formula (III),
the proportions of reactant (3i) being so chosen that the ratio

$$\frac{\text{number of moles of diaminesiloxane (3i)}}{\text{number of moles of diisocyanate (i) - number of moles of anhydride (2i)}}$$

is within the range from 0.5 to 1.

2. Process according to Claim 1, characterized in that the diisocyanate (i) of the formula (IV) is chosen from the group consisting of :
4,4'-diisocyanato-2,2-diphenylpropane,
4,4'-diisocyanato-diphenylmethane,
4,4'-diisocyanato-biphenyl,
4,4'-diisocyanato-diphenyl sulphide,
4,4'-diisocyanato-diphenyl sulphone,
4,4'-diisocyanato-diphenyl ether, and
4,4'-diisocyanato-1,1-diphenylcyclohexane.

3. Process according to either of Claims 1 and 2, characterized in that the tricarboxylic acid monoanhydride (2 i) of the formula (V) is chosen from the group consisting of :
trimellitic acid monoanhydride,
naphthalene-2,3,6-tricarboxylic acid 2,3-monoanhydride,
naphthalene-1,8,4-tricarboxylic acid 1,8-monoanhydride,
naphthalene-1,2,5-tricarboxylic acid 1,2-monoanhydride,
diphenyl-3,4,4'-tricarboxylic acid 3,4-monoanhydride,
diphenyl sulphone-3,4,3'-tricarboxylic acid 3,4-monoanhydride,
diphenyl ether 3,4,4'-tricarboxylic acid 3,4-monoanhydride,
benzophenone-3,4,4'-tricarboxylic acid 3,4-monoanhydride, and
diphenyl-isopropylidene-3,4,3'-tricarboxylic acid 3,4-monoanhydride.

4. Process according to any one of Claims 1 to 3, characterized in that as diamines (3i) of the formula (VI) there are used those wherein the diorganopolysiloxane group contains both Si-alkyl (or substituted Si-alkyl) bonds and Si-phenyl (or substituted Si-phenyl) bonds.

5. Process according to Claim 4, characterized in that the diamines (3i) employed are those which correspond to the formula (VI) in which :
X = —O—; $R_1$, $R_2$ and $R_3$, which may be identical or different, each represent a linear or branched alkyl radical having from 1 to 6 carbon atoms ; $R_4$ and $R_5$ each represent a phenyl radical ; x = 2, 3, 4 or 5 ; y + z is in the range from 0 to 100 and preferably from 4 to 70 ;
X = —O—; $R_1$, $R_2$ and $R_4$, which may be identical or different, each represent a linear or branched alkyl radical having from 1 to 6 carbon atoms ; $R_3$ and $R_5$ each represent a phenyl radical ; x = 2, 3, 4 or 5 ; y

+ z is in the range from 0 to 100 and preferably from 4 to 70 ;

X = —O— ; $R_1$ represents a linear or branched alkyl radical having from 1 to 6 carbon atoms ; $R_2$, $R_3$, $R_4$ and $R_5$ each represent a phenyl radical ; x = 2, 3, 4 or 5 ; y + z is in the range from 0 to 100 and preferably from 4 to 70.

6. Process according to any one of Claims 1 to 4, characterized in that the solvents employed in stage (c) and optionally in stage (b) are N,N-dimethylacetamide, N,N-dimethylformamide, N-methyl-pyrrolid-2-one, dimethyl sulphoxide and a mixture of these solvents.

## Patentansprüche

### Patentansprüche für folgende Vertragsstaaten : AT, BE, CH, DE, FR, GB, IT, LI, LU, NL, SE

1. Sequenzen aufweisende, thermostabile Copolymere, gekenneichnet durch die folgenden Punkte :

(1) sie umfassen in ihrer Struktur

— (Imid-Amid)-Blöcke der Formel

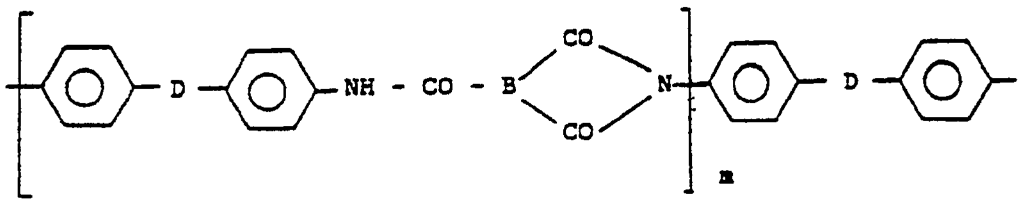

(I)

worin

D eine einfache Valenzbindung oder eine der folgenden Gruppen bedeutet :

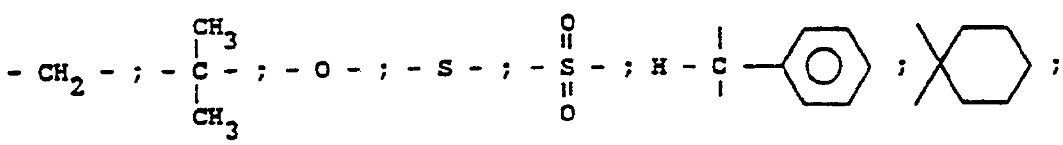

B einen dreiwertigen Rest, bestehend aus einem substituierten oder unbstituierten, aromatischen Rest oder aus zweien dieser Reste, die untereinander über eine einfache Valenzbindung oder eine Gruppe

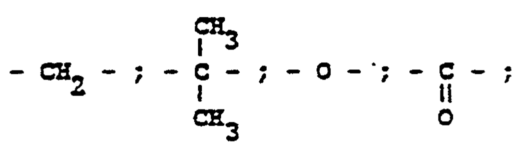

verbunden sind, wiedergibt ;

m für eine positive Zahl von zumindest 1 steht ;

— und (Harnstoff-Siloxan)-Blöcke der Formel

—NH-CO-NH-A-NH-CO-NH— (II)

worin A für einen zweiwertigen Diorganosiloxanrest der Formel

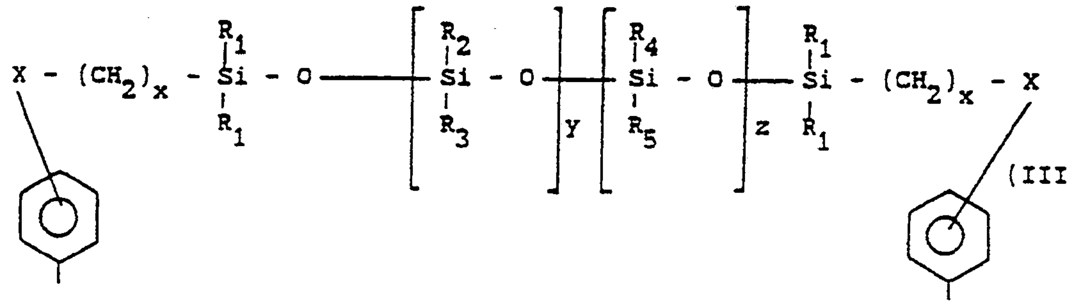

(III)

steht, worin

X, welches sich in ortho-, meta- oder para-Stellung in bezug auf das die Valenzbindung aufweisende Kohlenstoffatom des Benzolrings befindet, ein Atom oder eine Gruppe wie folgt

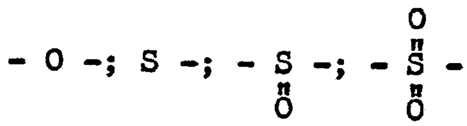

ist ;

$R_1$, $R_2$, $R_3$, $R_4$ und $R_5$, die gleich oder verschieden sind, jeweils einen einwertigen Kohlenwasserstoffrest bedeuten, ausgewählt unter : den linearen oder verzweigten Alkylresten mit 1 bis 12 Kohlenstoffatomen, wobei diese Reste durch ein oder mehrere Chlor-, Brom- oder Fluoratome oder durch die Gruppe —CN substituiert sein können ; einem gegebenenfalls durch ein oder mehrere Akyl- und/oder Alkoxyreste mit 1 bis 4 Kohlenstoffatomen oder durch ein oder mehr ere Chloratome substituierten Phenylrest ;

das Symbol x eine ganze Zahl im Bereich von 2 bis 8 bedeutet ;

die Symbole y und z gleiche oder verschiedene ganze Zahlen oder Bruchzahlen wiedergeben, deren Summe im Bereich von 0 bis 100 liegt ;

(2) sie werden erhalten, indem man in dem gleichen Reaktor die beiden folgenden Stufen aneinanderreiht: Stufe (a), worin

man ein Oligomeres mit endständigen Isocyanatgruppen herstellt durch Erhitzen auf eine Temperatur von 50 bis 200°C in Anwesenheit eines organischen Lösungsmittels oder eines Gemisches aus organischen Lösungsmitteln der folgenden Reagentien (i) und (2i), wobei

(i) ein Diisocyanat der Formel

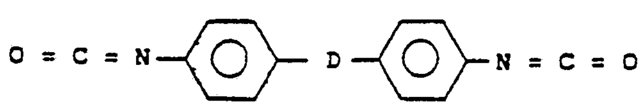

(IV)

ist, worin D die vorstehend für Formel (I) angegebene Bedeutung besitzt,

und (2i) ein Tricarbonsäure-monoanhydrid der Formel

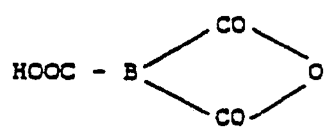

(V)

ist, worin die vorstehend für Formel (I) angegebene Bedeutung besitzt ;

die Anteile der Reagentien (i) und (2i) derart ausgewählt sind, daß das Verhältnis

$$\frac{\text{Anzahl der Mole Diisocyanat (i)}}{\text{Anzahl der Mole Anhydrid (2i)}}$$

in dem Bereich von 1,1 bis 2 liegt ;

man ein Erhitzen während einer ausreichenden Dauer vornimmt, um die Gesamtheit der funktionellen Gruppen des Anhydrids (2i) reagieren zu lassen ;
Stuffe (b), worin
man bei einer Temperatur von 50 bis 160°C das am Ende von Stufe (a) erhaltene Reaktionsmilieu, welches das Oligomere mit endständigen Isocyanatgruppen umfaßt, mit (3i) einem Diamin mit Diorganopolysiloxangruppen der Formel

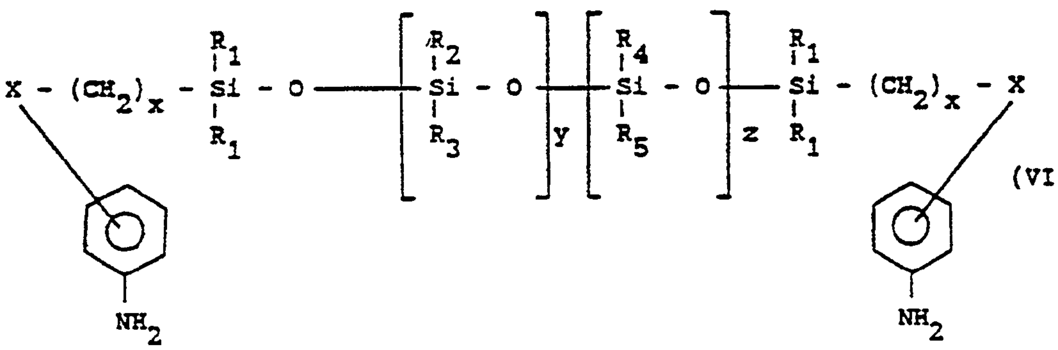

(VI)

umsetzt, worin X, $R_1$, $R_2$, $R_3$, $R_4$, $R_5$, x, y und z die vorstehend für Formel (III) angegebene Bedeutung besitzen; die Anteile des Reagens (3i) derart ausgewählt werden, daß das Verhältnis

$$\frac{\text{Anzahl der Mole Diaminsiloxan (3i)}}{\text{Anzahl der Mole Diisocyanat (i) - Anzahl der Mole Anhydrid (2i)}}$$

im Bereich von 0,5 bis 1 liegt.

2. Copolymere gemäß Anspruch 1, dadurch gekennzeichnet, daß das Diisocyanat (i) der Formel (IV) aus der folgenden Gruppe ausgewählt wird :
4,4′-Diisocyanato-2,2-diphenylpropan,
4,4′-Diisocyanato-diphenylmethan,
4,4′-Diisocyanato-biphenyl,
4,4′-Diisocyanato-diphenylsufid,
4,4′-Diisocyanato-diphenylsulfon,
4,4′-Diisocyanato-diphenylether,
4,4′-Diisocyanato-1,1-diphenylcyclohexan.

3. Copolymere gemäß einem der Ansprüche 1 und 2, dadurch gekennzeichnet, daß das Tricarbonsänremonoanhydrid (2i) der Formel (V) aus der folgenden Gruppe ausgewählt wird :
Trimellitsäure-monoanhydrid,
Naphthalin-2,3,6-tricarbonsäure-2,3-monoanhydrid,
Naphthalin-1,8,4-tricarbonsäure-1,8-monoanhydrid,
Naphthalin-1,2,5-tricarbonsäure-1,2-monoanhydrid,
Diphenyl-3,4,4′-tricarbonsäure-3,4-monoanhydrid,
Diphenylsulfon-3,4,4′-tricarbonsäure-3,4-monoanhydrid,
Diphenylether-3,4,4′-tricarbonsäure-3,4-monoanhydrid,
Benzophenon-3,4,4′-tricarbonsäure-3,4-monoanhydrid, Diphenyl-isopropyliden-3,4,3′-tricarbonsäure-3,4-monoanhydrid.

4. Copolymere gemäß einem der Ansprüche 1 bis 3, dadurch gekennzeichnet, daß man als Diamine (3i) der Formel (VI) diejenigen verwendet, worin die Diorganopolysiloxangruppe gleichzeitig Si-Alkyl- (oder Si-substituiertes Alkyl-)Bindungen und Si-Phenyl- (oder Si substituiertes Phenyl-) Bindungen umfaßt.

5. Copolymere gemäß Anspruch 4, dadurch gekennzeichnet, daß die eingesetzten Diamine (3i) diejenigen sind, die der Formel (VI) entsprechen, worin
X, —O— ; $R_1$, $R_2$ $R_3$, die gleich oder verschieden sind, jeweils einen linearen oder verzweigten Alkyrest mit 1 bis 6 Kohlenstoffatomen wiedergeben ; $R_4$, $R_5$ jeweils eine Phenylgruppe bedeuten, x = 2, 3, 4 oder 5 ; y + z in dem Bereich von 0 bis 100 und vorzugsweise 4 bis 70 liegt ;
X = —O— ; $R_1$, $R_2$, $R_4$, die gleich oder verschieden sind, jeweils einen linearen oder verzweigten Alkyrest

mit 1 bis 6 Kohlenstoffatomen wiedergeben ; $R_3$, $R_5$ jeweils für einen Phenylrest stehen ; x = 2, 3, 4 oder 5 ; y + z in dem Bereich von 0 bis 100 und vorzugsweise 4 bis 70 liegt ;

X = —O—, $R_1$ einen linearen oder verzweigten Alkyrest mit 1 bis 6 Kohlenstoffatomen wiedergibt ; $R_2$, $R_3$, $R_4$ und $R_5$ jeweils einen Phenylrest bedeuten ; x = 2, 3, 4 oder 5 ; y + z in dem Bereich von 0 bis 100 und vorzugsweise 4 bis 70 liegt.

6. Copolymere gemäß einem der Ansprüche 1 bis 4, dadurch gekennzeichnet, daß die in der Stufe (c) und gegebenenfalls in der Stufe (b) eingesetzten Lösungsmittel N,N-Dimethylacetamid, N,N-Dimethylformamid, N-Methyl-2-pyrrolidon, Dimethylsulfoxid und ein Gemisch dieser Lösungsmittel sind.

**Patentansprüche für folgenden Vertragsstaat : ES**

1. Verfahren zur Herstellung von Sequenzen aufweisenden, thermostabilen Copolymeren, die in ihrer Struktur umfassen :

— (Imid-Amid)-Blöcke der Formel

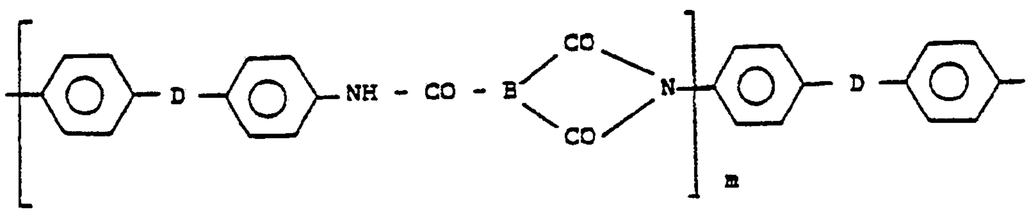

(I)

worin

D eine einfache Valenzbindung oder eine der folgenden Gruppen bedeutet :

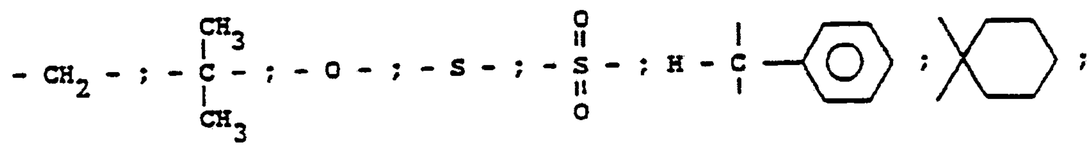

B einen dreiwertigen Rest, bestehend aus einem substituierten oder unsubstituierten, aromatischen Rest oder aus zweien dieser Reste, die untereinander über eine einfache Valenzbindung oder eine Gruppe

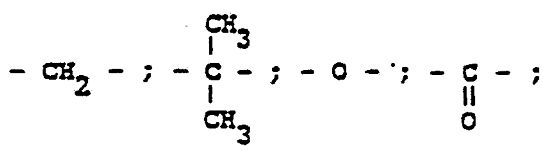

verbunden sind, wiedergibt ;

m für eine positive Zahl von zumindest 1 steht ; — und (Harnstoff-Siloxan)-Blöcke der Formel

—NH-CO-NH-A-NH-CO-NH— (II)

worin A für einen zweiwertigen Diorganosiloxanrest der Formel

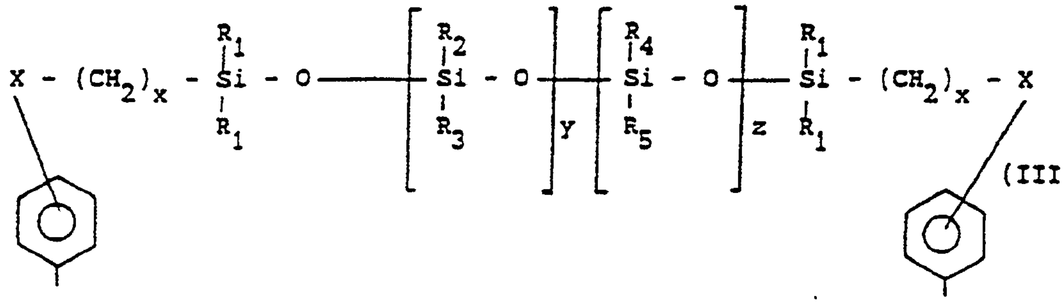

(III)

steht, worin

X, welches sich in ortho-, meta- oder para-Stellung in bezug auf das die Valenzbindung aufweisende Kohlenstoffatom des Benzolrings befindet, ein Atom oder eine Gruppe wie folgt

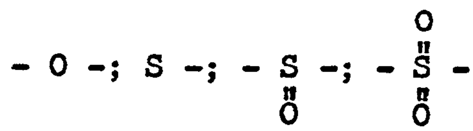

ist ;

$R_1$, $R_2$, $R_3$, $R_4$ und $R_5$, die gleich oder verschieden sind, jeweils einen einwertigen Kohlenwasserstoffrest bedeuten, ausgewählt unter : den linearen oder verzweigten Alkylresten mit 1 bis 12 Kohlenstoffatomen, wobei diese Reste durch ein oder mehrere Chlor-, Brom- oder Fluoratome oder durch die Gruppe —CN substituiert sein können ; einem gegebenenfalls durch ein oder mehrere Alkyl- und/oder Alkoxyreste mit 1 bis 4 Kohlenstoffatomen oder durch ein oder mehr ere Chloratome substituierten Phenylrest ;

das Symbol x eine ganze Zahl im Bereich von 2 bis 8 bedeutet ;

die Symbole y und z gleiche oder verschiedene ganze Zahlen oder Bruchzahlen wiedergeben, deren Summe im Bereich von 0 bis 100 liegt ;

dadurch gekennzeichet, daß es darin besteht, in einem gleichen Reaktor die beiden folgenden Stufen aneinanderzureihen :

Stufe (a), worin

man ein Oligomeres mit endständigen Isocyanatgruppen herstellt durch Erhitzen auf eine Temperatur von 50 bis 200°C in Anwesenheit eines organischen Lösungsmittels oder eines Gemisches aus organischen Lösungsmitteln der Folgenden Reagentien (i) und (2i), wobei

(i) ein Diisocyanat der Formel

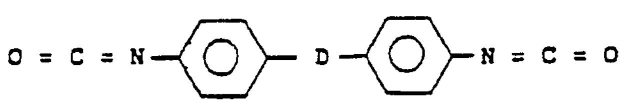

(IV)

ist, worin D die vorstehend für Formel (I) angegebene Bedeutung besitzt,
und (2i) ein Tricarbonsäure-monoanhydrid der Formel

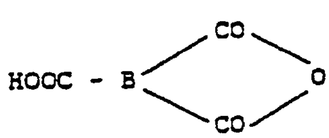

(V)

ist, worin B die vorstehend für Formel (I) angegebene Bedeutung besitzt ;
die Anteile der Reagentien (i) und (2i) derart ausgewählt werden, daß das Verhältnis

$$\frac{\text{Anzahl der Mole Diisocyanat (i)}}{\text{Anzahl der Mole Anhydrid (2i)}}$$

in dem Bereich von 1,1 bis 2 liegt ;
man ein Erhitzen während einer ausreichenden Dauer vornimmt, um die Gesamtheit der funktionellen Gruppen des Anhydrids (21) reagieren zu lassen ;
Stufe (b), worin
man bei einer Temperatur von 50 bis 160°C das am Ende von Stufe (a) erhaltene Reaktionsmilieu, welches das Oligomere mit endständigen Isocyanatgruppen umfaßt, mit (3i) einem Diamin mit Diorganopolysiloxangruppen der Formel

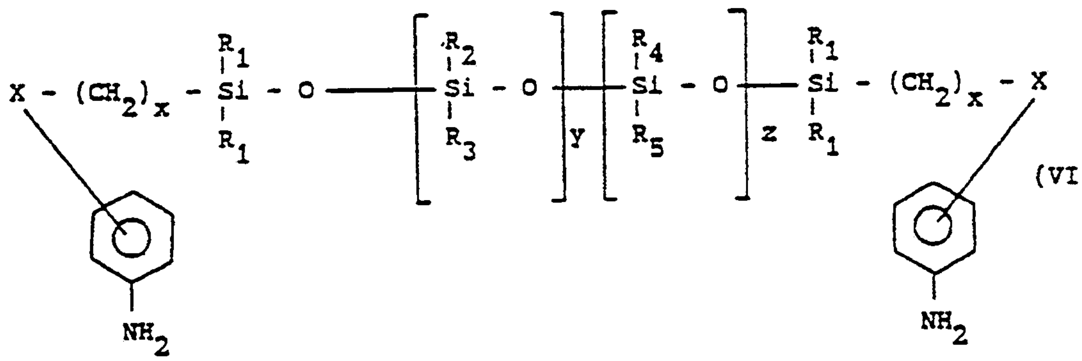

(VI)

umsetzt, worin X, $R_1$, $R_2$, $R_3$, $R_4$, $R_5$, x, y und z die vorstehend für Formel (III) angegebene Bedeutung besitzen; die Steile des Reagens (3i) derart ausgewählt werden, daß das Verhältnis

$$\frac{\text{Anzahl der Mole Diaminsiloxan (3i)}}{\text{Anzahl der Mole Diisocyanat (i) - Anzahl der Mole Anhydrid (2i)}}$$

im Bereich von 0,5 bis 1 liegt.

2. Verfahren gemäß Anspruch 1, dadurch gekennzeichnet, daß das Diisocyanat (i) der Formel (IV) aus der folgenden Gruppe ausgewählt wird :
4,4'-Diisocyanato-2,2-diphenylpropan,
4,4'-Diisocyanato-diphenylmethan,
4,4'-Diisocyanato-biphenyl,
4,4'-Diisocyanato-phenylsulfid,
4,4'-Diisocyanato-diphenylsulfon,
4,4'-Diisocyanato-diphenylether,
4,4'-Diisocyanato-1,1-diphenylcyclohexan.

3. Verfahren gemäß einem der Ansprüche 1 und 2, dadurch gekennzeichnet, daß das Tricarbonsäure-monoanhydrid (2i) der Formel (V) aus der folgenden Gruppe ausgewählt wird :
Trimellitsäure-monoanhydrid,
Naphthalin-2,3,6-tricarbonsäure-2,3-monoanhydrid,
Naphthalin-1,8,4-tricarbonsäure-1,8-monoanhydrid,
Naphthalin-1,2,5-tricarbonsäure-1,2-monoanhydrid,
Diphenyl-3,4,4'-tricarbonsäure-3,4-monoanhydrid,
Diphenylsulfon-3,4,3'-tricarbonsäure-3,4-monoanhydrid,
Diphenylether-3,4,4'-tricarbonsäure-3,4-monoanhydrid,
Benzophenon-3,4,4'-tricarbonsäure-3,4-monoanhydrid,
Diphenyl-isopropyliden-3,4,3'-tricarbonsäure-3,4-monoanhydrid.

4. Verfahren gemäß einem der Ansprüche 1 bis 3, dadurch gekennzeichet, daß man als Diamine (3i) der Formel (VI) diejenigen verwendet, worin die Diorganopolysiloxangruppe gleichzeitig Si-Alkyl- (oder Si-substituiertes Alkyl-)Bindungen und Si-Phenyl- (oder Si-substituiertes Phenyl-)Bindungen umfaßt.

5. Verfahren gemäß Anspruch 4, dadurch gekennzeichnet, daß die eingesetzten Diamine (3i) diejenigen sind, die der Formel (VI) entsprechen, worin

X = —O— ; $R_1$, $R_2$, $R_3$, die gleich oder verschieden sind, jeweils einen linearen oder verzweigten Alkylrest mit 1 bis 6 Kohlenstoffatomen wiedergeben ; $R_4$, $R_5$ jeweils eine Phenylgruppe bedeuten, x = 2, 3, 4 oder 5 ; y + z in dem Bereich von 0 bis 100 und vorzugsweise 4 bis 70 liegt ;

X = —O— ; $R_1$, $R_2$, $R_4$, die gleich oder verschieden sind, jeweils einen linearen oder verzweigten Alkylrest mit 1 bis 6 Kohlenstoffatomen wiedergeben ; $R_3$, $R_5$ jeweils für einen Phenylrest stehen ; x = 2, 3, 4 oder 5 ; y + z in dem Bereich von 0 bis 100 und vorzugsweise 4 bis 70 liegt ;

X = —O— ; $R_1$ einen linearen oder verzweigten Alkylrest mit 1 bis 6 Kohlenstoffatomen wiedergibt ; $R_2$, $R_3$, $R_4$ und $R_5$ jeweils einen Phenylrest bedeuten ; x = 2, 3, 4 oder 5 ; y + z in dem Bereich von 0 bis 100 und vorzugsweise 4 bis 70 liegt.

6. Verfahren gemäß einem der Ansprüche 1 bis 4, dadurch gekennzeichnet, daß die in der Stufe (c) und gegebenenfalls in der Stufe (b) eingesetzten Lösungsmittel N,N-Dimethylacetamid, N,N-Dimethylformamid, M-Methyl-2-pyrrolidon, Dimethylsulfoxid und ein Gemish dieser Lösungsmittel sind.